# EUROPEAN PATENT APPLICATION

(11) **EP 2 490 163 A1**
(43) Date of publication of application: **22.08.2012**
(21) Application number: 12154953.9
(22) Date of filing: 10.02.2012
(51) Int. Cl.: G06Q 10/08

(54) **Memory tag issue terminal, memory tag issue server, advertisement server, vendor identification server, memory tag, memory tag issuing method, and advertising method**

(30) Priority: 15.02.2011 JP 2011029729
(71) Applicant: Sony Corporation, Tokyo 108-0075 (JP)
(72) Inventor: Toyoda, Takahiro, Minato-ku, Tokyo 108-0075 (JP); Nagasaka, Hideo, Minato-ku, Tokyo 108-0075 (JP)
(74) Representative: Horner, David Richard

(57) **Abstract**

A memory tag issue terminal including: a first reading section reading commercial product information from an identification code printed on a commercial product or reading advertisement information from an identification code printed on an advertisement medium, the commercial product information being concerned with the commercial product, and the advertisement information being concerned with an advertisement object advertised through the advertisement medium; a writing section writing tag information into a memory tag attached or to be attached on the commercial product or the advertisement medium, the tag information including the commercial product information or the advertisement information; and an acquisition section acquiring vendor identification information which allows identification of a vendor who handles the commercial product or the advertisement medium.

## Description

The present disclosure relates to a memory tag for storing information, and a memory tag issue terminal, a memory tag issue server, an advertisement server, a vendor identification server, a memory tag issuing method, and an advertising method using such a memory tag.

In selling commercial products at shops, a POS (Point Of Sale) system has been often used. The POS system identifies each of commercial products using, for example, bar codes and the like attached on commercial products. This allows to manage sales amount and the like for each of commercial products.

In recent years, memory tags such as RF tags capable of storing various information have been utilized for a variety of applications. Some proposals have been provided for a method to utilize those memory tags at shops. For example, Japanese Unexamined Patent Application Publication No. 2005-275630 discloses a commercial product information provision system capable of downloading commercial product information on a commercial product based on identification information stored in an IC tag attached on the commercial product.

### Summary of the Invention

Embodiments of the invention provide a memory tag issue terminal, a memory tag issue server, an advertisement server, a vendor identification server, a memory tag, a memory tag issuing method, and an advertising method which are capable of enhancing the convenience for retailing commercial products.

A memory tag issue terminal according to an embodiment of the present disclosure includes a first reading section, a writing section, and an acquisition section. The first reading section reads commercial product information from an identification code printed on a commercial product or reads advertisement information from an identification code printed on an advertisement medium, the commercial product information being concerned with the commercial product, and the advertisement information being concerned with an advertisement object advertised through the advertisement medium. The writing section writes tag information into a memory tag attached or to be attached on the commercial product or the advertisement medium, the tag information including the commercial product information or the advertisement information. The acquisition section acquires vendor identification information which allows identification of a vendor who handles the commercial product or the advertisement medium.

A memory tag issue server according to the embodiment of the present disclosure includes a receiving section, a tag information generation section, and a transmitting section. The receiving section receives both commercial product information or advertisement information and vendor identification information from a memory tag issue terminal, the memory tag issue terminal being configured to read the commercial product information from an identification code printed on a commercial product or to read the advertisement information from an identification code printed on an advertisement medium and to write tag information into the memory tag, the commercial product information being concerned with the commercial product, the advertisement information being concerned with a advertisement object advertised through the advertisement medium, and the vendor identification information allowing identification of a vendor who handles the commercial product or the advertisement medium. The tag information generation section generates the tag information based on the commercial product information or the advertisement information. The transmitting section transmits the tag information to the memory tag issue terminal.

An advertisement server according to an embodiment of the present disclosure includes a first receiving section and a processing section. The first receiving section receives tag information from a client's terminal, the tag information being stored in a memory tag attached on a commercial product or an advertisement medium and including commercial product information or advertisement information, the commercial product information being concerned with the commercial product, and the advertisement information being concerned with a advertisement object advertised through the advertisement medium. The processing section executes prescribed processing based on the commercial product information or the advertisement information, or vendor identification information which allows identification of a vendor who handles the commercial product or the advertisement medium.

A vendor identification server according to an embodiment of the present disclosure includes a first receiving section, a storage section, a second receiving section, and a transmitting section. The first receiving section receives, from a memory tag issue terminal, tag identification information allowing identification of a memory tag and vendor identification information allowing identification of a vendor who handles a commercial product or an advertisement medium, the memory tag issue terminal being configured to read the commercial product information from an identification code printed on the commercial product or to read the advertisement information from an identification code printed on the advertisement medium and to write tag information into the memory tag. The storage section holds the tag identification information and the vendor identification information in association with one another. The second receiving section receives tag identification information from an external device. The transmitting section retrieves vendor identification information corresponding to the tag identification information received by the second receiving section, based on the tag identification information and the vendor identification information which are stored in the storage section, and transmits the retrieved vendor identification information.

A memory tag according to an embodiment of the present disclosure includes a storage section and a transmitting section. The storage section holds tag information including both commercial product information or advertisement information and vendor identification information, the commercial product information being concerned with a commercial product and being obtained from an identification code printed on the commercial product, the advertisement information being concerned with a advertisement object advertised through a advertisement medium and being obtained from an identification code printed on the advertisement medium, and vendor identification information allowing identification of a vendor who handles the commercial product or the advertisement medium. The transmitting section transmits, to a client's terminal, the commercial product information or the advertisement information being along with the vendor identification information.

A memory tag issuing method according to an embodiment of the present disclosure includes allowing a memory tag issue terminal to read commercial product information from an identification code printed on a commercial product or to read advertisement information from an identification code printed on an advertisement medium, the commercial product information being concerned with the commercial product, and the advertisement information being concerned with a advertisement object advertised through the advertisement medium; obtaining vendor identification information which allows identification of a vendor who handles the commercial product or the advertisement medium; and allowing the memory tag issue terminal to write tag information into a memory tag, the tag information being generated based on the commercial product information or the advertisement information, the memory tag being attached or to be attached on the commercial product or the advertisement medium.

An advertising method according to an embodiment of the present disclosure includes allowing a client's terminal to read tag information including commercial product information or advertisement information from a memory tag attached on a commercial product or an advertisement medium, the commercial product information being concerned with the commercial product, and the advertisement information being concerned with a advertisement object advertised through the advertisement medium; allowing an advertisement server to transmit detailed information concerned with the commercial product or the advertisement object to the client's terminal, the detailed information being obtained based on the commercial product information or the advertisement information which are read by the client's terminal; and allowing the advertisement server to perform reward payment procedure to the vendor, based on vendor identification information allowing identification of a vendor who handles the commercial product or the advertisement medium.

In the memory tag issue terminal, the memory tag issue server, the advertisement server, the vendor identification server, the memory tag, the memory tag issuing method, and the advertising method according to the embodiments of the present disclosure, tag information including commercial product information or advertisement information is written into a memory tag attached or to be attached on a commercial product or an advertisement medium. At that time, the tag information is generated based on an identification code printed on the commercial product or the advertisement medium.

In the memory tag issue terminal, the memory tag issue server, the advertisement server, the vendor identification server, the memory tag, the memory tag issuing method, and the advertising method according to the embodiments of the present disclosure, tag information is generated based on an identification code printed on the commercial product or the advertisement medium, and is written into a memory tag attached or to be attached on the commercial product or the advertisement medium, which ensures to enhance the convenience in retailing.

Further particular and preferred aspects of the present invention are set out in the accompanying independent and dependent claims. Features of the dependent claims may be combined with features of the independent claims as appropriate, and in combinations other than those explicitly set out in the claims.

### BRIEF DESCRIPTION OF THE DRAWINGS

The present invention will be described further, by way of example only, with reference to preferred embodiments thereof as illustrated in the accompanying drawings, in which:
FIG. 1 is a block diagram showing a configuration example for an electronic commerce system according to a first embodiment of the present disclosure.
FIG. 2 is a block diagram showing a configuration example of an RF tag shown in FIG. 1.
FIG. 3 is a block diagram showing a configuration example of a cellular phone related to an RF tag issue system shown in FIG. 1.
FIG. 4 is a block diagram showing a configuration example of an RF tag issue server shown in FIG. 1.
FIG. 5 is a block diagram showing a configuration example of a cellular phone related to a selling system shown in FIG. 1.
FIG. 6 is a block diagram showing a configuration example of an affiliate server shown in FIG. 1.
FIG. 7 is a sequence diagram showing an operating example of the RF tag issue system shown in FIG. 1.
FIG. 8 is a sequence diagram showing another operating example of the RF tag issue system shown in FIG. 1.
FIG. 9 is a sequence diagram showing an operating example of the selling system shown in FIG. 1.
FIG. 10 is an explanatory diagram showing an example of a display screen on the cellular phone related to the selling system shown in FIG. 1.
FIG. 11 is an explanatory diagram showing another example of a display screen on the cellular phone related to the selling system shown in FIG. 1.
FIG. 12 is a sequence diagram showing an operating example of an RF tag issue system according to a modification of the first embodiment.
FIG. 13 is a block diagram showing a configuration example of an RF tag according to another modification of the first embodiment.
FIG. 14 is a block diagram showing a configuration example of the RF tag issue server according to another modification of the first embodiment.
FIG. 15 is a sequence diagram showing an operating example of the RF tag issue system according to another modification of the first embodiment.
FIG. 16 is a sequence diagram showing an operating example of a selling system according to another modification of the first embodiment.
FIG. 17 is a block diagram showing a configuration example of an electronic commerce system according to another modification of the first embodiment.
FIG. 18 is a block diagram showing a configuration example of a cellular phone related to the RF tag issue system shown in FIG. 17.
FIG. 19 is a sequence diagram showing an operating example of the RF tag issue system shown in FIG. 17.
FIGs. 20A and 20B are explanatory diagrams each showing a configuration example of the RF tag according to another modification of the first embodiment.
FIG. 21 is a block diagram showing a configuration example of an advertisement system according to a second embodiment.
FIG. 22 is a block diagram showing a configuration example of an advertisement server shown in FIG. 21.
FIG. 23 is a block diagram showing a configuration example of a picture recording/playback unit shown in FIG. 21.
FIG. 24 is a sequence diagram showing an operating example of an advertisement system shown in FIG. 21.
FIG. 25 is a sequence diagram showing an operating example of another advertisement system shown in FIG. 21.

### DETAILED DESCRIPTION

The accompanying drawings are included to provide a further understanding of the present disclosure, and are incorporated in and constitute a part of this specification. The drawings illustrate embodiments and, together with the specification, serve to explain the principles of the present technology.

Referring to the drawings, embodiments of the present disclosure are hereinafter described in details. The descriptions are provided in order given below.
1. First embodiment
2. Second embodiment

### <1. First Embodiment>

### [Configuration Example]

### (Overall Configuration Example)

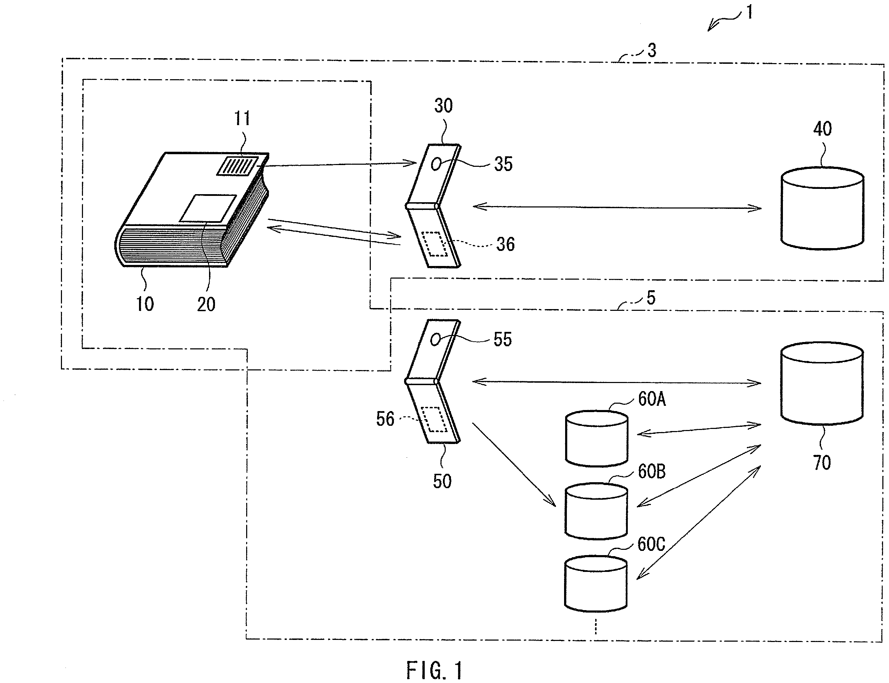

FIG. 1 shows a configuration example of an electronic commerce system according to a first embodiment of the present disclosure. It is to be noted that a memory tag issue terminal, a memory tag issue server, an advertisement server, a vendor identification server, a memory tag, a memory tag issuing method, and an advertising method according to embodiments of the present disclosure are embodied in the embodiments, and thus they are collectively described.

An electronic commerce system 1 includes an RF tag issue system 3 and a selling system 5.

### (RF Tag issue system 3)

The RF tag issue system 3 has a book 10, a cellular phone 30, and an RF tag issue server 40. As mentioned later, the RF tag issue system 3 issues an RF tag by writing RF tag information INF onto an RF tag 20 attached to the book 10 laid out for sale in a store S.

The book 10 is laid out for sale in the store S as a commercial product to be handled by the electronic commerce system 1. It is to be noted that in the following descriptions the book 10 is used as an example of a commercial product to be handled by the electronic commerce system 1, but a commercial product is not only limited to such a book, and any articles that have the potential to be a commercial product may be alternatively applicable.

As shown in FIG. 1, a bar code 11 is printed and the RF tag 20 is attached on the book 10. The bar code 11 is an identification code (commercial product identification information IDC) which allows identification of a commercial product (book 10), and a JAN (Japanese Article Number) code is usable for example. The RF tag 20 holds the RF tag information INF, while transmitting/receiving the RF tag information INF and any other data to/from the cellular phones 30 and 50 (mentioned later) via a noncontact communication. For the RF tag 20, a tag such as a FeliCa™ Lite is usable for example.

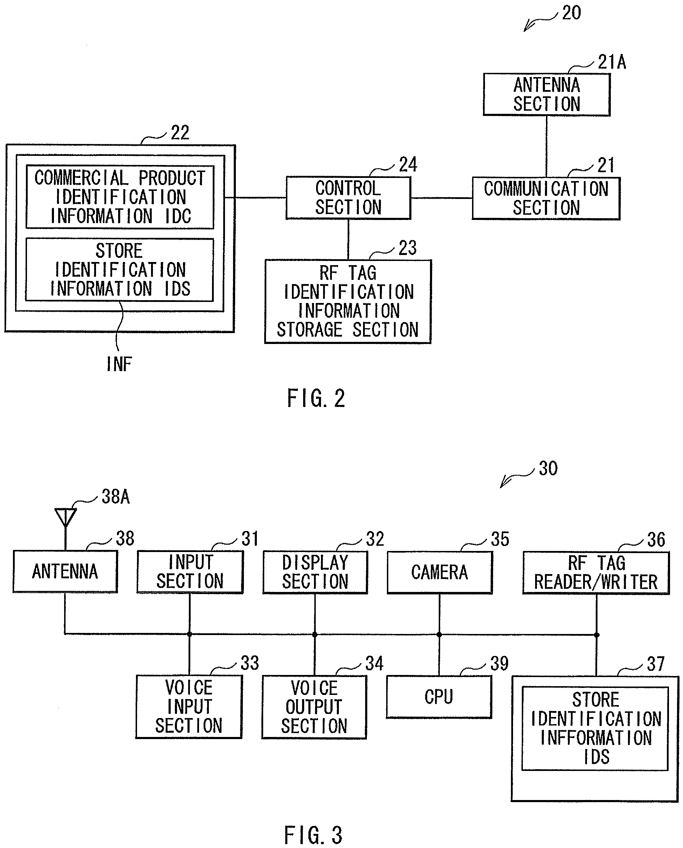

FIG. 2 shows a configuration example of the RF tag 20. The RF tag 20 has a communication section 21, a memory 22, an RF tag identification information storage section 23, and a control section 24.

The communication section 21 makes a noncontact communication with the cellular phones 30 and 50 (mentioned later) via an antenna section 21A. The memory 22 holds the RF tag information INF. In this example, such RF tag information INF includes the commercial product identification information IDC and store identification information IDS which allows identification of the store S. As mentioned later, this RF tag information INF is stored in the memory 22 when an RF tag is issued by the cellular phone 30. Further, in the memory 22, key information Kw for writing that is not shown in the figure is also stored in addition to the RF tag information INF. The RF tag identification information storage section 23 holds identification information (RF tag identification information IDR) which allows identification of the RF tag 20. The RF tag identification information IDR, which is stored in the RF tag identification information storage section 23 at the time of manufacturing the RF tag 20, is intended to prevent later rewriting. The control section 24 controls the communication section 21, the memory 22, and the RF tag identification information storage section 23.

The cellular phone 30 is a terminal to be used by an owner O of the store S to issue RF tags. It is to be noted that descriptions are hereinafter provided taking the cellular phone 30 as an example, but the terminal is not only limited to such a cellular phone. Alternatively, any electronic apparatuses with a capability to issue RF tags as described below may be used including electronic apparatuses dedicated for issuing RF tags for example.

FIG. 3 shows a configuration example of the cellular phone 30. The cellular phone 30 has an input section 31, a display section 32, a voice input section 33, a voice output section 34, a camera 35, an RF tag reader/writer 36, a memory 37, a communication section 38, and a CPU (Central Processing Unit) 39.

The input section 31 is an input interface such as a numeric keypad. The display section 32 represents information for a user (owner O of the store S), and is configured of, for example, a liquid crystal display section. The voice input section 33 is a microphone for voice input. The voice output section 34 is a speaker for voice output. The camera 35, which takes a picture image, photographs the bar code 11 printed on the book 10 in this example. The RF tag reader/writer 36 makes a noncontact communication with the RF tag 20 attached on the book 10. Specifically, the RF tag reader/writer 36 is capable of writing and/or reading the RF tag information INF to/from the memory 22 on the RF tag 20. The memory 37, which holds information, holds the store identification information IDS in this example. As mentioned later, the store identification information IDS is issued by the RF tag issue server 40 to be stored in the memory 37 when registration of the store S is performed for the RF tag issue server 40. The communication section 38 communicates voice information or data with a base station for the cellular phone that is not shown in the figure via an antenna 38A. In this example, the communication section 38 enables communication with the RF tag issue server 40 connected to the Internet (not shown in the figure) via such a base station. The CPU 39 controls those blocks on the cellular phone 30.

With such a configuration on the cellular phone 30, as mentioned later, the camera 35 photographs the bar code 11, thereby obtaining the commercial product identification information IDC, and the communication section 38 transmits the commercial product identification information IDC along with the store identification information IDS stored in the memory 37 to the RF tag issue server 40. Further, the communication section 38 receives the RF tag information INF transmitted from the RF tag issue server 40, while the RF tag reader/writer 36 writes the RF tag information INF into the RF tag 20 attached on the book 10.

The RF tag issue server 40 generates the RF tag information INF based on the commercial product identification information IDC and the store identification information IDS.

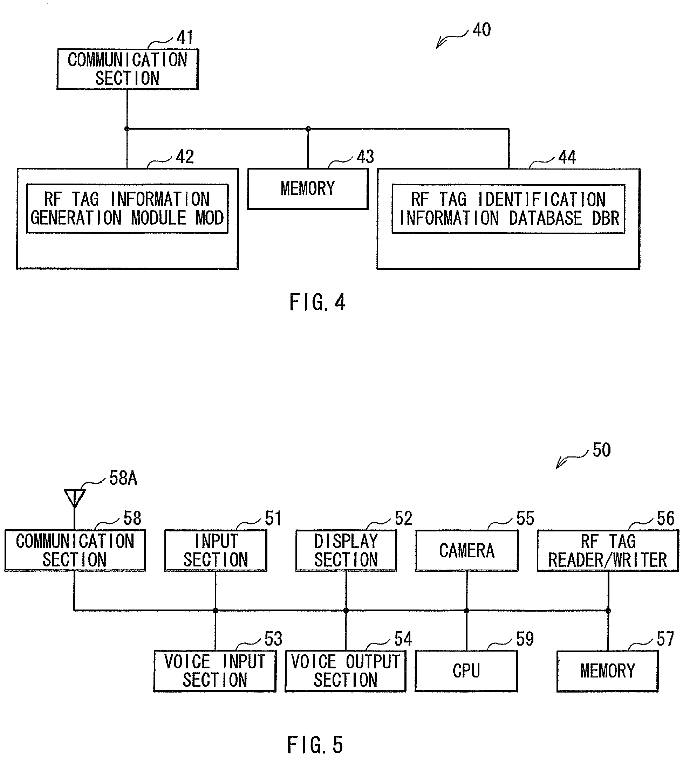

FIG. 4 shows a configuration example of the RF tag issue server 40. The RF tag issue server 40 has a communication section 41, a CPU 42, a memory 43, and a main storage section 44.

The communication section 41 is a network interface for communication with the cellular phone 30 via the Internet and a base station for the cellular phone that are not shown in the figure. The CPU 42 controls each block on the RF tag issue server 40, while having a function to run an RF tag information generation module MOD. The RF tag information generation module MOD generates the RF tag information INF based on the commercial product identification information IDC and the store identification information IDS. The memory 43 holds temporary information to be processed when the CPU 42 executes processing. The main storage section 44 holds programs to be processed by the CPU 42. Further, the main storage section 44 has an RF tag identification information database DBR to manage the RF tag identification information IDR for RF tags that have been manufactured to date.

With such a configuration on the RF tag issue server 40, as mentioned later, the communication section 41 receives the product identification information IDC and the store identification information IDS that are transmitted from the cellular phone 30, while the CPU 42 executes processing to generate the RF tag information INF based on the commercial product identification information IDC and the store identification information IDS according to programs stored in the main storage section 44. Subsequently, the communication section 41 transmits the RF tag information INF to the cellular phone 30.

### (Selling System 5)

The selling system 5 has a cellular phone 50, electronic mall servers 60 (60A, 60B, 60C, and others), and an affiliate server 70. In the selling system 5, when a purchaser P who sees the book 10 laid out for sale in a certain store S and has an interest in such a book purchases the book 10 at another store (electronic mall in this example), a reward is paid to the store S.

The cellular phone 50 is a terminal used by the purchaser P who has an interest in the book 10. FIG. 5 shows a configuration example of the cellular phone 50. The cellular phone 50, which has almost the same configuration as the cellular phone 30 (FIG. 3) in this example, includes an input section 51, a display section 52, a voice input section 53, a voice output section 54, a camera 55, an RF tag reader/writer 56, a memory 57, a communication section 58, and a CPU 59.

The electronic mall servers 60 (60A, 60B, 60C, and others) are servers for selling commercial products using the electronic commerce, each of them corresponding to different electronic malls M (MA, MB, MC, and others). In this example, each of the electronic malls M related to the electronic mall servers 60 handles the book 10 as a commercial product.

The affiliate server 70 transmits information on a plurality of electronic malls handling the book 10 to the purchaser P (cellular phone 50), while having a function to perform reward payment processing (affiliate processing) for the store S.

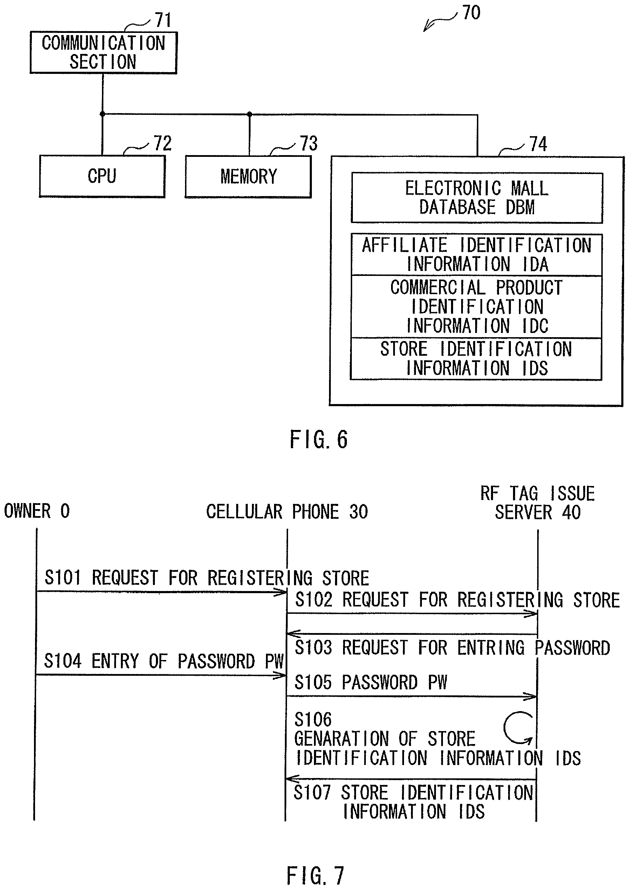

FIG. 6 shows a configuration example of the affiliate server 70. The affiliate server 70 has a communication section 71, a CPU 72, a memory 73, and a main storage section 74.

The communication section 71 is a network interface for communication with the cellular phone 50 via the Internet and a base station for the cellular phone that are not shown in the figure, or for communication with the electronic mall servers 60 via the Internet that is not shown in the figure. The CPU 72 controls each block on the affiliate server 70, while having a function to perform the affiliate processing. The memory 73 holds temporary information to be processed when the CPU 72 executes processing.

The main storage section 74 holds programs to be processed by the CPU 72. Further, the main storage section 74 has an electronic mall database DBM including URL (Uniform Resource Locator) for each of the electronic mall servers 60 and the like. In addition, the main storage section 74 associates affiliate identification information IDA which allows identification of the affiliate processing, the commercial product identification information IDC, and the store identification information IDS with each other for storage. As mentioned later, the affiliate identification information IDA is generated after the communication section 71 receives the RF tag information INF transmitted from the cellular phone 50, and the commercial product identification information IDC and the store identification information IDS that are included in the RF tag information INF are associated with the affiliate identification information IDA.

With such a configuration on the affiliate server 70, as mentioned later, the communication section 71 receives the RF tag information INF transmitted from the cellular phone 50 (purchaser P), while the CPU 72 generates the affiliate identification information IDA, and the main storage section 74 holds the affiliate identification information IDA in association with the commercial product identification information IDC and the store identification information IDS that are included in the RF tag information INF. Subsequently, the CPU 72 makes an inquiry to a plurality of electronic mall servers 60 for stock status or price of the book 10 according to above information and the electronic mall database DBM to create a list concerning the book 10, and the communication section 71 transmits the list to the cellular phone 50 (purchaser P). Further, when the communication section 71 receives from the cellular phone 50 a notice indicating that a purchaser P will purchase the book 10 using the list, the CPU 72 executes processing for paying a reward to the store S based on the store identification information IDS.

Thereupon, the book 10 corresponds to a specific example of a "commercial product" in the present disclosure. The bar code 11 corresponds to a specific example of an "identification code" in the present disclosure. The commercial product identification information IDC corresponds to a specific example of "commercial product information" in the present disclosure. The store identification information IDS corresponds to a specific example of "vendor identification information" in the present disclosure. The RF tag information INF corresponds to a specific example of "tag information" in the present disclosure. The RF tag identification information IDR corresponds to a specific example of "tag identification information" in the present disclosure.

The RF tag 20 corresponds to a specific example of a "memory tag" in the present disclosure. The communication section 21 corresponds to a specific example of a "transmitting section" in the present disclosure. The memory 22 corresponds to a specific example of a "storage section" in the present disclosure.

The cellular phone 30 corresponds to a specific example of a "memory tag issue terminal" in the present disclosure. The camera 35 corresponds to a specific example of a "first reading section" in the present disclosure. The RF tag reader/writer 36 corresponds to a specific example of a "writing section" in the present disclosure. The communication section 38 corresponds to a specific example of a "first transmitting section", a "second transmitting section", and a "receiving section" in the present disclosure.

The RF tag issue server 40 corresponds to a specific example of a "memory tag issue server" and a "second server for memory tag issue terminal" in the present disclosure. The communication section 41 corresponds to a specific example of a "receiving section" and a "transmitting section" in the present disclosure. The RF tag information generation module MOD corresponds to a specific example of a "tag information generation section" in the present disclosure.

The cellular phone 50 corresponds to a specific example of a "client's terminal" in the present disclosure.

The affiliate server 70 corresponds to a specific example of an "advertisement server" in the present disclosure. The communication section 71 corresponds to a specific example of a "first receiving section" in the present disclosure. The CPU 72 corresponds to a specific example of a "processing section" in the present disclosure.

### [Operation and Function]

Hereinafter, operation and function of the electronic commerce system 1 according to the embodiment is described.

### (Overview of Overall Operation)

In the first place, overall operation of the electronic commerce system 1 is outlined with reference to FIG. 1 to FIG. 6.

To begin with, an owner O uses the RF tag issue system 3 and operates the cellular phone 30 to perform an RF tag issuance processing operation for the RF tag 20 attached on the book 10. Specifically, first of all, on the cellular phone 30, the camera 35 photographs the bar code 11, thereby obtaining the commercial product identification information IDC, and the communication section 38 transmits the commercial product identification information IDC along with the store identification information IDS stored in the memory 37 to the RF tag issue server 40. On the RF tag issue server 40, the RF tag information generation module M generates the RF tag information INF based on the commercial product identification information IDC and the store identification information IDS that are transmitted from the cellular phone 30, while the communication section 41 transmits the RF tag information INF to the cellular phone 30. On the cellular phone 30, the RF tag reader/writer 36 writes the RF tag information INF transmitted from the RF tag issue server 40 into the memory 22 on the RF tag 20 attached on the book 10.

The selling system 5 provides a purchaser P who sees the book 10 laid out for sale in a store S and has an interest in such a book with information related to the book 10, while performing processing to pay a reward to the store S when the purchaser P purchases the book 10. Specifically, in the first place, on the cellular phone 50, the RF tag reader/writer 56 obtains the RF tag information INF from the RF tag 20 attached on the book 10 based on the operation by the purchaser P, and the communication section 58 transmits the RF tag information INF to the affiliate server 70. The affiliate server 70 makes an inquiry to the plurality of electronic mall servers 60 for stock status, price, or the like of the book 10 according to the RF tag information INF transmitted from the cellular phone 50, and transmits a list concerning the book 10 to the cellular phone 50. Subsequently, upon reception of a notice that is transmitted from the cellular phone 50 to indicate that a purchaser P will purchase the book 10 using the list, the affiliate server 70 performs processing to pay a reward to the store S.

In the next place, detailed operation of the electronic commerce system 1 is described. Hereinafter, detailed operation of the RF tag issue system 3 is described in the first place, and subsequently detailed operation of the selling system 5 is described.

### (Detailed Operation of RF Tag issue system 3)

To begin with, store registration in the RF tag issue system 3 is described.

FIG. 7 shows an operating example for store registration in the RF tag issue system 3. In such a store registration process, an owner O of a store S registers the store S on the RF tag issue server 40 using the cellular phone 30. Detailed description is as follows.

First of all, the owner O performs a store registration request operation for the cellular phone 30 (step S101). Subsequently, the cellular phone 30 transmits a store registration request to the RF tag issue server 40 (step S102). Specifically, on the cellular phone 30, an application software is started, and the CPU 39 transmits the store registration request to the RF tag issue server 40 via the communication section 38 based on operation of the input section 31 by the owner O. On the RF tag issue server 40, the communication section 41 receives such a store registration request.

Secondly, the RF tag issue server 40 transmits a request for entry of a password to be registered to the cellular phone 30 (step S103). Specifically, the CPU 42 transmits the request for entry of a password to be registered to the cellular phone 30 via the communication section 41 according to the store registration request received by the communication section 41 in the step S102. On the cellular phone 30, the communication section 38 receives this request for entry of a password.

Subsequently, the owner O enters a password PW to be registered on the cellular phone 30 (step S104). The cellular phone 30 transmits this password PW to the RF tag issue server 40 (step S105). Specifically, on the cellular phone 30, the CPU 39 transmits the password PW entered through operation of the input section 31 by the owner O to the RF tag issue server 40 via the communication section 38. On the RF tag issue server 40, the communication section 41 receives the password PW.

Thereafter, the RF tag issue server 40 generates the store identification information IDS (step S106). Then, the RF tag issue server 40 transmits the store identification information IDS to the cellular phone 30. Specifically, the CPU 42 generates the store identification information IDS, transmitting such information to the cellular phone 30 via the communication section 41. On the cellular phone 30, the communication section 38 receives the store identification information IDS, and the memory 37 holds the store identification information IDS.

The above steps complete this sequence.

In the next place, RF tag issuance in the RF tag issue system 3 is described.

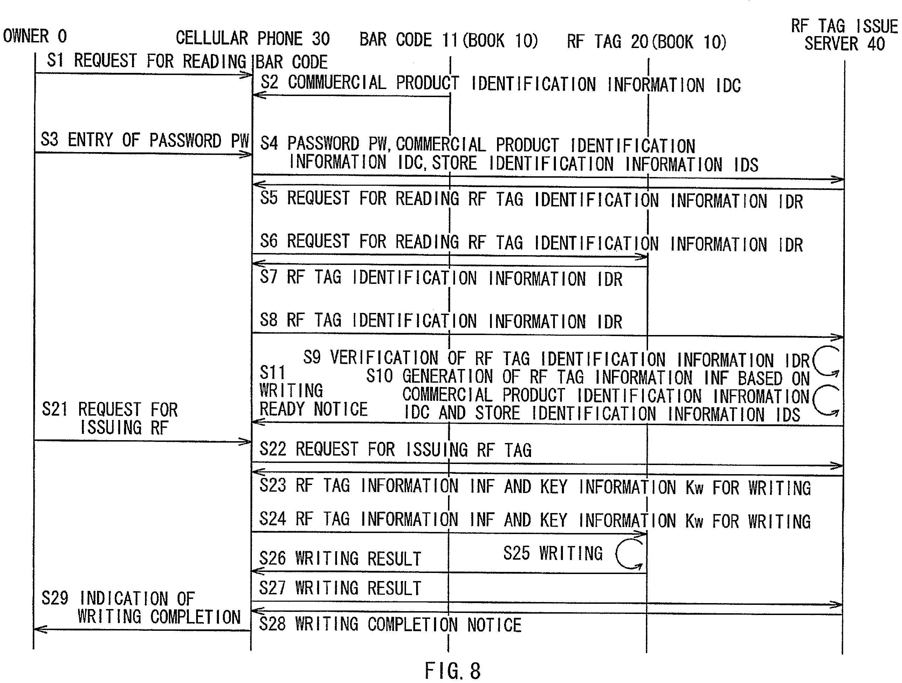

FIG. 8 shows an operating example of RF tag issuance in the RF tag issue system 3. In this RF tag issuance process, first of all, the cellular phone 30 obtains the commercial product identification information IDC from the bar code 11 printed on the book 10 according to operation by the owner O, transmitting the commercial product identification information IDC along with the store identification information IDS to the RF tag issue server 40. The RF tag issue server 40 generates the RF tag information INF, writing the RF tag information INF into the RF tag 20 attached on the book 10 via the cellular phone 30. Detailed description is as follows.

To begin with, the owner O makes a bar code reading request to the cellular phone 30 (step S1). Then, the cellular phone 30 obtains the commercial product identification information IDC from the bar code 11 printed on the book 10 (step S2). Specifically, on the cellular phone 30, an application software is started, and the CPU 39 controls the camera 35 according to operation of the input section 31 by the owner O, wile the camera 35 photographs the bar code 11 printed on the book 10. Thereafter, the CPU 39 obtains the commercial product identification information IDC based on the image photographed by the camera 35.

Subsequently, the owner O enters a registered password PW on the cellular phone 30 (step S3). Then, the cellular phone 30 transmits the password PW, the commercial product identification information IDC, and the store identification information IDS to the RF tag issue server 40 (step S4). Specifically, on the cellular phone 30, the CPU 39 transmits the password PW entered through operation of the input section 31 by the owner O, the commercial product identification information IDC obtained in the step S2, and the store identification information IDS stored in the memory 37 to the RF tag issue server 40 via the communication section 38. On the RF tag issue server 40, the communication section 41 receives the password PW, the commercial product identification information IDC, and the store identification information IDS.

Secondly, the RF tag issue server 40 transmits a request for reading the RF tag identification information IDR to the RF tag 20 attached on the book 10 via the cellular phone 30 (steps S5 and S6). Specifically, first of all, on the RP tag issue server 40, the CPU 42 transmits a request for reading the RF tag identification information IDR to the cellular phone 30 via the communication section 41. Then, on the cellular phone 30, the communication section 38 receives the request for reading the RF tag identification information IDR, while the CPU 39 transmits this reading request to the RF tag 20 via the RF tag reader/writer 36. On the RF tag 20, the communication section 21 receives the request for reading the RF tag identification information IDR that is transmitted from the cellular phone 30.

Next, the RF tag 20 transmits the RF tag identification information IDR to the RF tag issue server 40 via the cellular phone 30 (steps S7 and S8). Specifically, first of all, on the RF tag 20, the control section 24 transmits the RF tag identification information IDR stored in the RF tag identification information storage section 23 to the cellular phone 30 via the communication section 21 according to the request for reading the RF tag identification information IDR that is received by the communication section 21 in the step S6. Then, on the cellular phone 30, the RF tag reader/writer 36 receives the RF tag identification information IDR, while the CPU 39 transmits the RF tag identification information IDR to the RF tag issue server 40 via the communication section 38. On the RF tag issue server 40, the communication section 41 receives the RF tag identification information IDR transmitted from the cellular phone 30.

Thereafter, the RF tag issue server 40 verifies the RF tag identification information IDR (step S9). Specifically, the CPU 42 verifies that the RF tag 20 is regularly manufactured, by retrieving the RF tag identification information database DBR stored in the main storage section 44 according to the RF tag identification information IDR received by the communication section 41 in the step S8.

Then, the RF tag issue server 40 generates the RF tag information INF (step S10). Specifically, the RF tag information generation module MOD generates the RF tag information INF according to the commercial product identification information IDC and the store identification information IDS that are received by the communication section 41 in the step S4. At this time, the RF tag issue server 40 may obtain detailed information on the book 10 (book title, author name, publisher name, contents outline, and the like) based on the commercial product identification information IDC from, for example, a server accumulating commercial product information that is not shown in the figure to generate the RF tag information INF along with such information.

Thereafter, the RF tag issue server 40 transmits a write ready notice to the cellular phone 30 (step S11). Specifically, the CPU 42 transmits a notice indicating that the RF tag information INF has been generated in the step S4, and a write operation is ready to the cellular phone 30 via the communication section 41. Then, on the cellular phone 30, the communication section 38 receives the write ready notice, and the display section 32 represents such a notice, thereby giving a notice indicating that the write operation is ready to the owner O.

Subsequently, the owner O makes a request for issuing the RF tag to the cellular phone 30 (step S21). Then, the cellular phone 30 transmits the request for issuing the RF tag to the RF tag issue server 40 (step S22). Specifically, on the cellular phone 30, the CPU 39 transmits the request for issuing the RF tag to the RF tag issue server 40 via the communication section 38 according to operation of the input section 31 by the owner O. On the RF tag issue server 40, the communication section 41 receives the request for issuing the RF tag.

Secondly, the RF tag issue server 40 transmits the RF tag information INF and key information Kw for writing to the RF tag 20 attached on the book 10 via the cellular phone 30 (steps S23 and S24). Specifically, first of all, on the RF tag issue server 40, the CPU 42 transmits the RF tag information INF generated in the step S10 along with the key information Kw for writing to the cellular phone 30 via the communication section 41. On the cellular phone 30, the communication section 38 receives the RF tag information INF and the key information Kw for writing, while the CPU 39 transmits such information to the RF tag 20 via the RF tag reader/writer 36. Then, on the RF tag 20, the communication section 21 receives the RF tag information INF and the key information Kw for writing that are transmitted from the cellular phone 30.

Next, the RF tag 20 performs write processing of the RF tag information INF and the key information Kw for writing (step S25). Specifically, the control section 24 writes the RF tag information INF and the key information Kw for writing that are received by the communication section 21 in the step S24 into the memory 22.

Then, the RF tag 20 transmits a write processing result in the step S25 to the RF tag issue server 40 via the cellular phone 30 (steps S26 and S27). Specifically, first of all, on the RF tag 20, the control section 24 transmits the write processing result in the step S25 to the cellular phone 30 via the communication section 21. On the cellular phone 30, the RF tag reader/writer 36 receives the write processing result, while the CPU 39 transmits the write processing result to the RF tag issue server 40 via the communication section 38. Then, on the RF tag issue server 40, the communication section 41 receives the write processing result transmitted from the cellular phone 30.

Thereafter, the RF tag issue server 40 transmits a write completion notice to the cellular phone 30 (step S28). Then, the cellular phone 30 displays that a write operation is complete (step S29). Specifically, first of all, on the RF tag issue server 40, the CPU 42 determines that a write operation is complete based on the write processing result received by the communication section 41 in the step S27, and transmits the write completion notice to the cellular phone 30 via the communication section 41. Then, on the cellular phone 30, the communication section 38 receives the write completion notice. The CPU 39 indicates that a write operation is complete on the display section 32.

The above steps complete this sequence.

In such a way, the RF tag information INF is generated based on the bar code 11 printed on the book 10 in the RF tag issue system 3, which allows the owner O or salespeople at the store S to efficiently prepare the RF tag information INF corresponding to the book 10. In other words, when the bar code 11 is not used for example, a worker searches for the book 10 personally using, for example, a book database or the like to generate the RF tag information INF based on a search result, resulting in taking a lot of trouble with search or other tasks. On the other hand, the RF tag issue system 3 obtains the commercial product identification information IDC from the bar code 11, and generates the RF tag information INF based on such information, ensuring an efficient work.

Further, on the RF tag issue system 3, the RF tag information INF is generated based on the bar code 11 printed on the book 10, and is written into the RF tag 20 on the spot, which ensures that processing is performed independently for each book 10. This enables reduction of a risk that the RF tag information INF related to any book different from the book 10 may be written into the RF tag 20.

Moreover, on the RF tag issue system 3, the RF tag 20 before information is written is attached on a commercial product in advance, and thereafter the RF tag information INF generated based on the bar code 11 is written into the attached RF tag 20, which ensures to reduce a risk that a wrong RF tag 20 may be attached on the book 10. More specifically, for example, when the RF tag 20 is to be attached on the book 10 after the RF tag information INF is written into the RF tag 20, wrong attachment such as attachment of the RF tag 20 related to a different book is likely to occur. On the other hand, in the RF tag issue system 3, the RF tag information INF is written into the RF tag 20 attached on a commercial product, resulting in the possibility of wrong attachment being eliminated.

Further, the RF tag issue system 3 allows various information to be written by the use of the RF tag 20. Especially, a capability of writing the store identification information IDS into the RF tag 20 enables the book 10 to be managed for each store. More specifically, for example, the affiliation at a store level is achieved as described below.

### (Detailed Operation of Selling System 5)

In the next place, detailed operation of the selling system 5 is described.

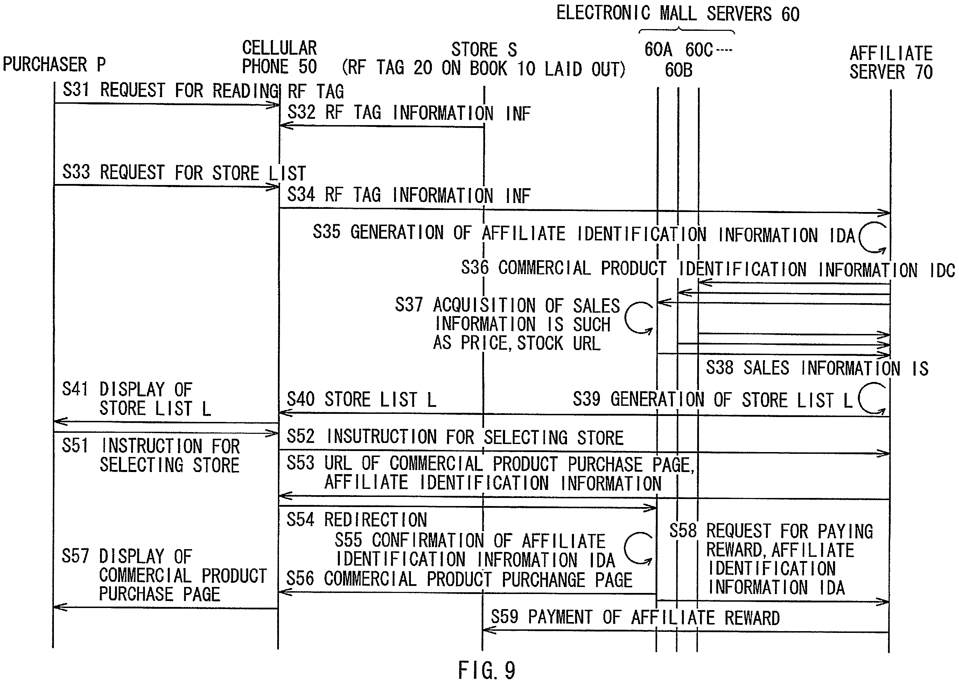

FIG. 9 shows an operating example of the selling system 5. On the selling system 5, first of all, the cellular phone 50 obtains the RF tag information INF from the RF tag 20 attached on the book 10 according to operation by a purchaser P at a store S, and transmits the RF tag information INF to the affiliate server 70. The affiliate server 70 transits a list of information on the electronic mall M handling the book 10 to the cellular phone 50. Then, the affiliate server 70 performs processing to pay a reward to the store S when the purchaser P buys the book 10. Hereinafter, such an operation sequence is described in details.

First, the purchaser P makes a request for reading the RF tag to the cellular phone 50 at the store S (step S31). Then, the cellular phone 50 obtains the RF tag information INF from the RF tag 20 attached on the book 10 (step S32). Specifically, on the cellular phone 50, application software is started, and the CPU 59 controls the RF tag reader/writer 56 according to operation of the input section 51 by the purchaser P, requesting the RF tag information INF to the RF tag 20. On the RF tag 20, the control section 24 reads the RF tag information INF from the memory 22 based on a request transmitted from the cellular phone 50, and transmits the RF tag information INF to the cellular phone 50 via the communication section 21. Then, on the cellular phone 50, the RF tag reader/writer 56 receives the RF tag information INF.

Next, the purchaser P requests a list of shops handling the book 10 to the cellular phone 50 (step S33). Then, the cellular phone 50 transmits the RF tag information INF to the affiliate server 70 based on such a request (step S34). Specifically, on the cellular phone 50, the CPU 59 transmits the RF tag information INF received by the RF tag reader/writer 56 in the step S32 to the affiliate server 70 via the communication section 58 according to operation of the input section 51 by the purchaser P. On the affiliate server 70, the communication section 71 receives the RF tag information INF.

Subsequently, the affiliate server 70 generates affiliate identification information LDA (step S35). Specifically, the CPU 72 generates the affiliate identification information IDA which allows identification of affiliate processing. Then, the CPU 72 stores in the main storage section 74 the commercial product identification information IDC and the store identification information IDS that are included in the RF tag information INF received by the communication section 71 in the step S34, in association with the affiliate identification information IDA.

Thereafter, the affiliate server 70 transmits the commercial product identification information IDC to a plurality of electronic mall servers 60 (step S36). Specifically, the CPU 72 transmits the commercial product identification information IDC received by the communication section 71 in the step S35 to the plurality of electronic mall servers 60 that are registered in the electronic mall database DBM on the main storage section 74.

Then, each of the electronic mall servers 60 obtains sales information IS such as price, stock, and URL of purchase page of the book 10 (step S37). Specifically, each of the electronic mall servers 60 identifies the book 10 based on the commercial product identification information IDC transmitted from the affiliate server 70 to obtain the sales information IS on the book 10. Then, each of the electronic mall servers 60 transmits this sales information IS to the affiliate server 70 (step S38). On the affiliate server 70, the communication section 71 receives the sales information IS transmitted from each of the electronic mall servers 60.

Afterwards, the affiliate server 70 generates a store list L (step S39). Specifically, the CPU 72 generates the store list L of the electronic malls M handling the book 10 based on the sales information IS from the plurality of electronic mall servers 60 that is received by the communication section 71 in the step S38. In this example, the store list L contains information on price, stock or the like of the commercial product in each of the electronic malls M as well.

Next, the affiliate server 70 transmits the store list L to the cellular phone 50 (step S40). Specifically, the CPU 72 transmits the store list L generated in the step S39 to the cellular phone 50 via the communication section 71. Alternatively, for example, the CPU 72 may obtain detailed information on the book 10 (book title, author name, publisher name, contents outline, and the like) based on the commercial product identification information IDC to transmit such information along with the store list L to the cellular phone 50. On the cellular phone 50, the communication section 58 receives the store list L.

Subsequently, the cellular phone 50 displays the store list L (step S41). Specifically, the CPU 59 displays the store list L received by the communication section 58 in the step S40 on the display section 52.

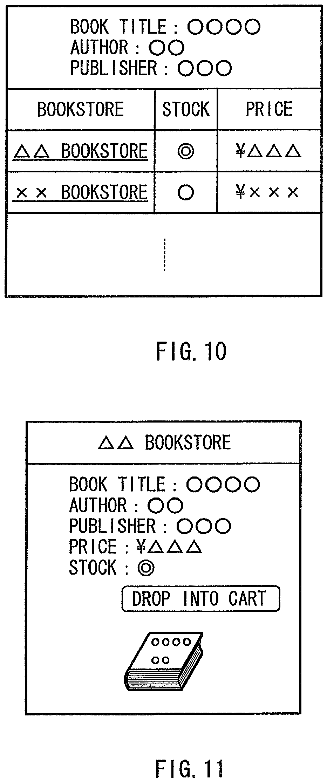

FIG. 10 shows an example for displaying the store list L on the display section 52. As shown in FIG. 10, the display section 52 lists the electronic malls (bookstores) handling the book 10 along with the stock information and price information on the screen.

Thereafter, the purchaser P gives a store selection instruction to the cellular phone 50 (step S51). Then, the cellular phone 50 transmits the store selection instruction to the affiliate server 70 (step S52). Specifically, first of all, the purchaser P selects a store at which he or she likes to purchase the book 10 according to a display screen of the store list L shown in FIG. 10. On the cellular phone 50, the CPU 59 transmits the store selection instruction to the affiliate server 70 via the communication section 58 according to operation of the input section 31 by the purchaser P. On the affiliate server 70, the communication section 71 receives the store selection instruction.

Subsequently, the affiliate server 70 transmits the URL of the commercial product purchase page and the affiliate identification information IDA to the cellular phone 50 (step S53). Then, the cellular phone 50 redirects such information to the electronic mall server 60A corresponding to the selected store (step S54). Specifically, the CPU 72 obtains the URL of the commercial product purchase page at the selected store (electronic mall server 60A in this example) based on the store selection instruction received by the communication section 71 in the step S52 and the sales information IS received by the communication section 71 in the step S38. Then, the CPU 72 transmits the URL of the commercial product purchase page along with the affiliate identification information IDA to the cellular phone 50 via the communication section 71. On the cellular phone 54, the communication section 58 receives the URL of the commercial product purchase page and the affiliate identification information IDA. Then, the CPU 59 requests the commercial product purchase page to the electronic mall server 60A, while transmitting the affiliate identification information IDA.

Afterwards, the electronic mall server 60A confirms the affiliate identification information IDA (step S55). This allows the electronic mall server 60A to recognize that such a sale is achieved via the affiliate server 70.

Next, the electronic mall server 60A transmits the commercial product purchase page to the cellular phone 50 (step S56). On the cellular phone 50, the communication section 58 receives the commercial product purchase page.

Subsequently, the cellular phone 50 displays the commercial product purchase page (step S57). Specifically, the CPU 59 displays the commercial product purchase page received by the communication section 58 in the step S56 on the display section 52 as shown in FIG. 11 for example.

The electronic mall server 60A transmits a reward payment request for this affiliate along with the affiliate identification information IDA to the affiliate server 70 after transmitting the commercial product purchase page to the cellular phone 50 in the step S56 (step S58). Then, on the affiliate server 70, the communication section 71 receives the reward payment request and the affiliate identification information IDA.

Thereafter, the affiliate server 70 performs processing for paying an affiliate reward to the store S (step S59). Specifically, the CPU 72 obtains the store identification information IDS (store S) that is stored in the main storage section 74 and is associated with the affiliate identification information IDA, based on the reward payment request and the affiliate identification information IDA that are received by the communication section 71 in the step S58. Then, the CPU 72 performs processing for paying a reward to the store S.

The above steps complete this sequence.

In such a manner, the electronic commerce system 1 ensures that the store identification information IDS is written into the RF tag 20. Therefore, for example, even when the purchaser P purchases the book 10 at another store, it is possible to pay a reward to the store S that gives an opportunity of the purchase.

### [Effect]

As stated above, according to the embodiment of the present disclosure, the RF tag information is generated based on a bar code printed on a commercial product. This ensures that the RF tag information corresponding to the commercial product is prepared efficiently.

Further, according to the embodiment of the present disclosure, the RF tag information is generated based on a bar code printed on a commercial product, and is written into an RF tag on the spot, which ensures that processing is performed independently for each commercial product. This enables reduction of a risk that the RF tag information related to a different commercial product may be written into the RF tag.

Moreover, according to the embodiment of the present disclosure, an RF tag before information is written is attached on a commercial product in advance, and thereafter the RF tag information generated based on a bar code is written into the attached RF tag, which ensures to reduce a risk that a wrong RF tag may be attached on a commercial product.

In addition, according to the embodiment of the present disclosure, the store identification information is written into an RF tag. Therefore, for example, even when a purchaser purchases a commercial product at another store, it is possible to pay a reward to a store that gives an opportunity of the purchase.

### [Modification 1-1]

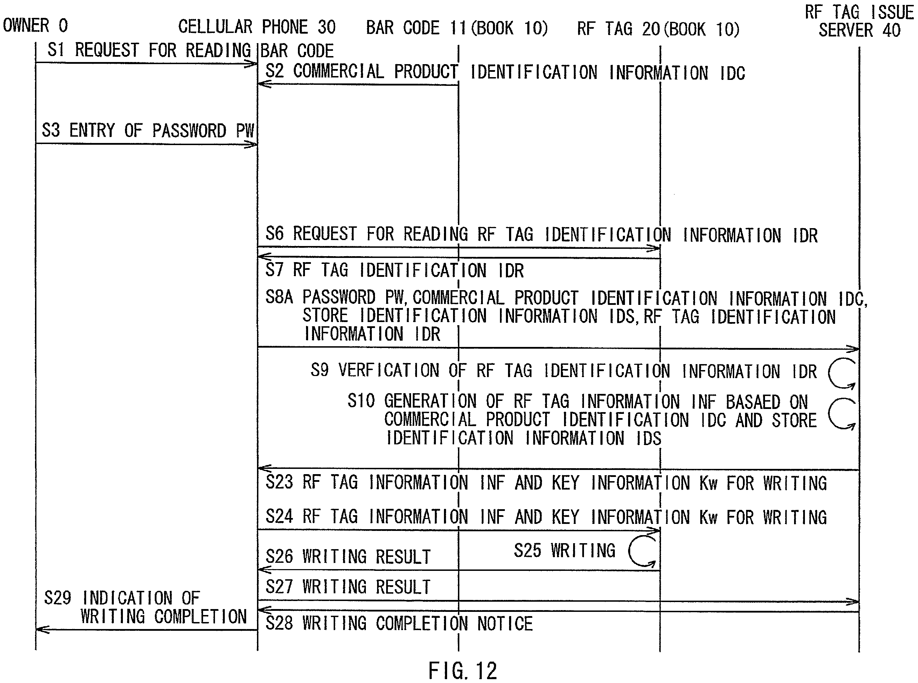

According to the above-described embodiment, in issuing an RF tag, the RF tag issue server 40 obtains the commercial product identification information IDC and the store identification information IDS as well as the RF tag identification information IDR separately from the cellular phone 30 (steps S4 and S8) as shown in FIG. 8, but the embodiment is not limited to such an arrangement. Alternatively, for example, as shown in FIG. 12, the commercial product identification information IDC and the store identification information IDS as well as the RF tag identification information IDR may be obtained at the same time (step S8A). Further, according to the above-described embodiment, the RF tag issue server 40 issues an RF tag according to an RF tag issuance request from an owner O (step S21) as shown in FIG. 8, but the embodiment is not limited to such an arrangement. Alternatively, for example, as shown in FIG. 12, an RF tag may be issued without the need for an RF tag issuance request from an owner O.

### [Modification 1-2]

According to the above-described embodiment, the RF tag information INF includes the commercial product identification information IDC and the store identification information IDS, but the embodiment is not limited to such an arrangement. Alternatively, for example, the RF tag information INF may not include the store identification information IDS, and instead the RF tag issue server may hold the store identification information IDS. Hereinafter, such a modification is described in details. It is to be noted that any components essentially same as those of the electronic commerce system 1 according to the above-described embodiment are marked with the same codes, and the related descriptions are omitted as appropriate.

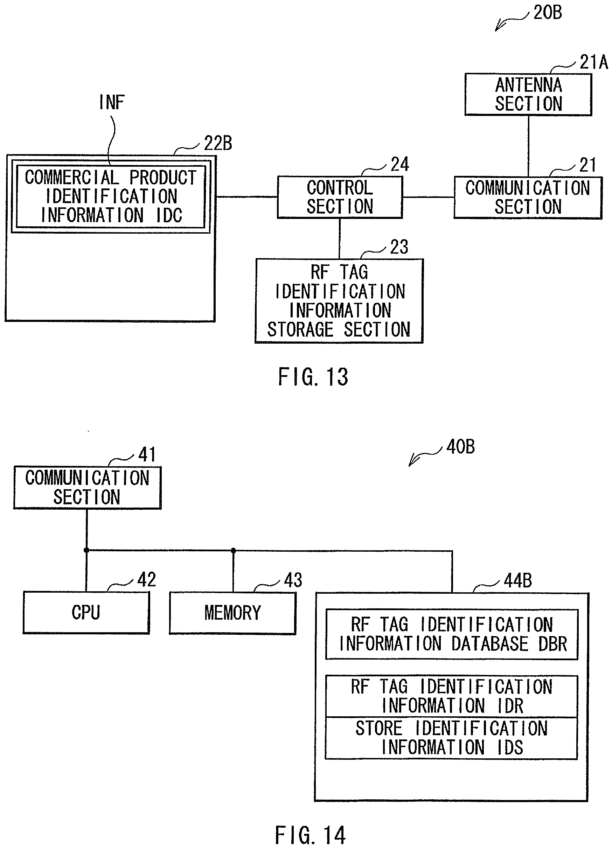

FIG. 13 shows a configuration example for an RF tag 20B according to the modification of the first embodiment. The RF tag 20B has a memory 22B. The memory 22B holds the RF tag information INF. Unlike the RF tag information INF (FIG. 2) according to the above-described embodiment, this RF tag information INF does not include the store identification information IDS.

FIG. 14 shows a configuration example for an RF tag issue server 40B according to the modification. The RF tag issue server 40 B has a main storage section 44B. The main storage section 44B holds the RF tag identification information IDR and the store identification information IDS in addition to the RF tag identification information database DBR. The RF tag identification information IDR and the store identification information IDS are stored in association with one another.

Thereupon, the RF tag reader/writer 36 corresponds to a specific example of a "writing section" and a "second reading section" in the present disclosure. The RF tag issue server 40 corresponds to a specific example of a "memory tag issue server", a "vendor identification server", a "first server for memory tag issue terminal", and a "second server for memory tag issue terminal" in the present disclosure. The communication section 71 corresponds to a specific example of a "first receiving section" and a "second receiving section" in the present disclosure.

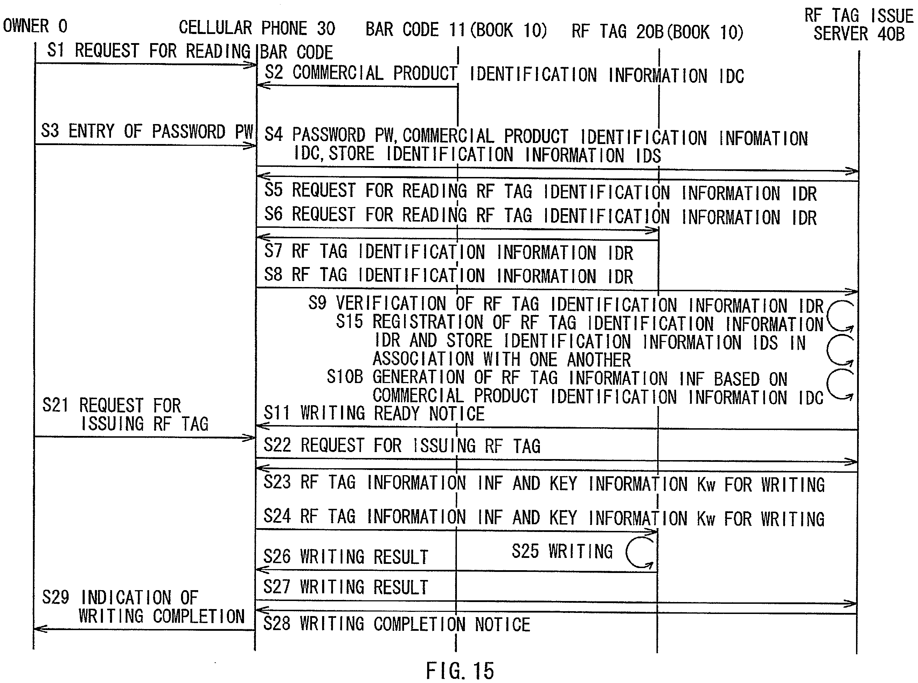

FIG. 15 shows an operating example for the RF tag issuance on the RF tag issue system according to the modification of the first embodiment of the present disclosure. In FIG. 15, a step S15 is added for the case of the RF tag issue system 3 according to the above-described embodiment (FIG. 8), and a step S10 is changed to a step 10B.

In the step S15, the RF tag issue server 40B registers the RF tag identification information IDR and the store identification information IDS in association with one another. Specifically, the CPU 42 stores in the main storage section 44B the RF tag identification information IDR received by the communication section 41 in the step S8 and the store identification information IDS received by the communication section 41 in the step S4 in association with one another.

Next, in the step S10B, the RF tag issue server 40 B generates the RF tag information INF. Specifically, the CPU 42 generates the RF tag information INF based on the commercial product identification information IDC received by the communication section 41 in the step S4. In other words, the RF tag information INF does not include the store identification information IDS.

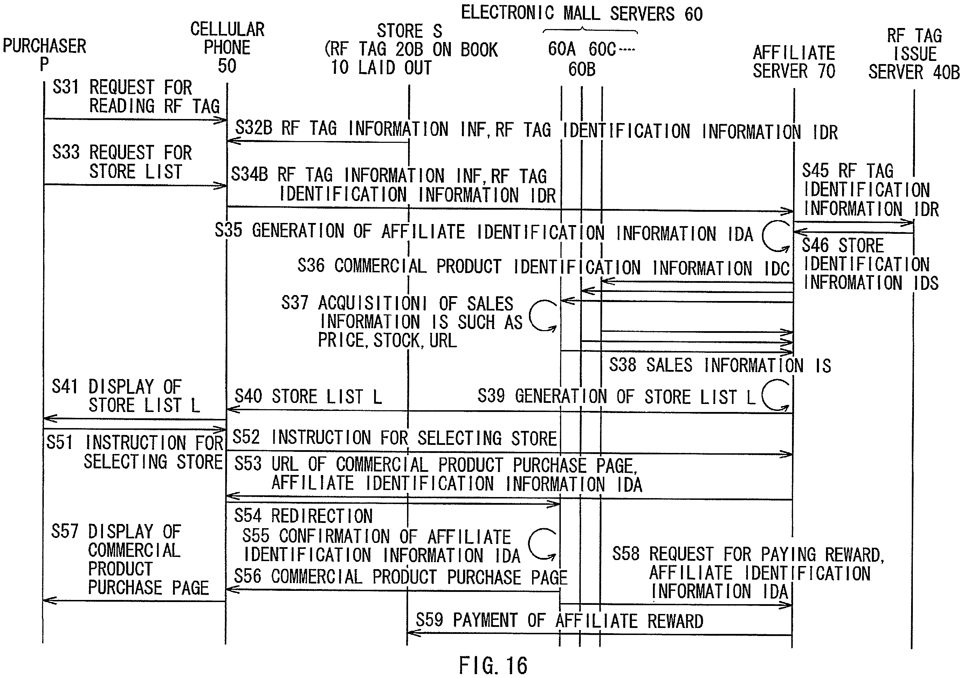

FIG. 16 shows an operating example of the selling system according to the modification. In FIG. 16, steps S45 and S46 are added for the case of the RF tag issue system 3 according to the above-described embodiment (FIG. 8), and steps S32 and S34 are changed to steps S32B and S34B, respectively.

In the step S32B, the cellular phone 50 obtains the RF tag information INF and the RF tag identification information IDR from the RF tag 20 attached on the book 10.

In the step S34B, the cellular phone 50 transmits the RF tag information INF and the RF tag identification information IDR to the affiliate server 70.

In the step S45, the affiliate server 70 transmits the RF tag identification information IDR to the RF tag issue server 40B. Specifically, the CPU 72 transmits the RF tag identification information IDR received by the communication section 71 in the step S34B to the RF tag issue server 40B via the communication section 71. Then, on the RF tag issue server 40B, the communication section 41 receives the RF tag identification information IDR.

Subsequently, in the step S46, the RF tag issue server 40B transmits the store identification information IDS to the affiliate server 70. Specifically, the CPU 42 obtains the store identification information IDS corresponding to the RF tag identification information IDR received by the communication section 41 in the step S45 based on the RF tag identification information IDR and the store identification information IDS that are stored in the main storage section 44B in association with one another. Then, the CPU 42 transmits the store identification information IDS to the affiliate server 70 via the communication section 41. On the affiliate server 70, the communication section 71 receives the store identification information IDS.

As stated above, in this modification, the RF tag issue server 40B registers the RF tag identification information IDR and the store identification information IDS in association with one another, and thus it is possible to obtain the store identification information IDS based on the RF tag identification information IDR even if the RF tag information INF does not include the store identification information IDS, thereby allowing to achieve the same effect as with the above-described embodiment. It is to be noted that, in this modification, the RF tag issue server 40B registers the RF tag identification information IDR and the store identification information IDS in association with one another, but the embodiment is not limited to such an arrangement. Alternatively, for example, a server dedicated for registering the RF tag identification information IDR and the store identification information IDS in association with one another may be separately provided, and the RF tag issue server 40B and the affiliate server 70 may perform a handling operation of such data with this dedicated server.

### [Modification 1-3]

According to the above-described embodiment, the RF tag issue server 40 generates the RF tag information INF, but the embodiment is not limited to such an arrangement. Alternatively, the cellular phone 30 may generate the RF tag information INF. Hereinafter, such a modification is described in details.

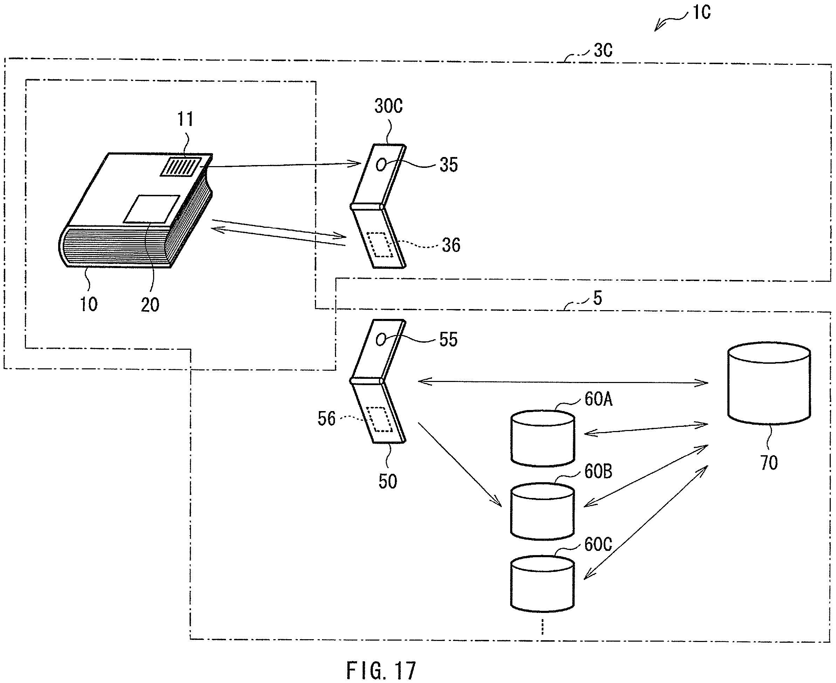

FIG. 17 shows a configuration example of an electronic commerce system 1C according to the modification. The electronic commerce system 1C has an RF tag issue system 3C. The RF tag issue system 3C has a cellular phone 30C. The cellular phone 30C generates the RF tag information INF based on the bar code 11, and issues an RF tag by writing the RF tag information INF into the RF tag 20.

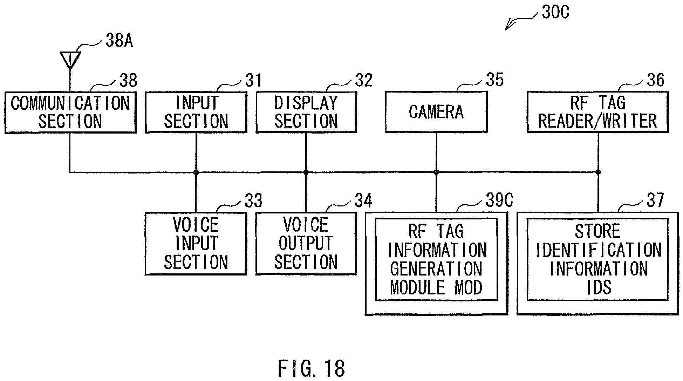

FIG. 18 shows a configuration example of the cellular phone 30C. The cellular phone 30C has a CPU 39C. The CPU 39C has a function to control each block on the cellular phone 30C, and to execute an RF tag information generation module MOD. The RF tag information generation module MOD, which is the same as the MOD to be executed by the CPU 42 on the RF tag issue server 40 according to the above-described embodiment, generates the RF tag information INF based on the commercial product identification information IDC and the store identification information IDS. Hereupon, the RF tag information generation module MOD corresponds to a specific example of a "tag information generation section" in the present disclosure.

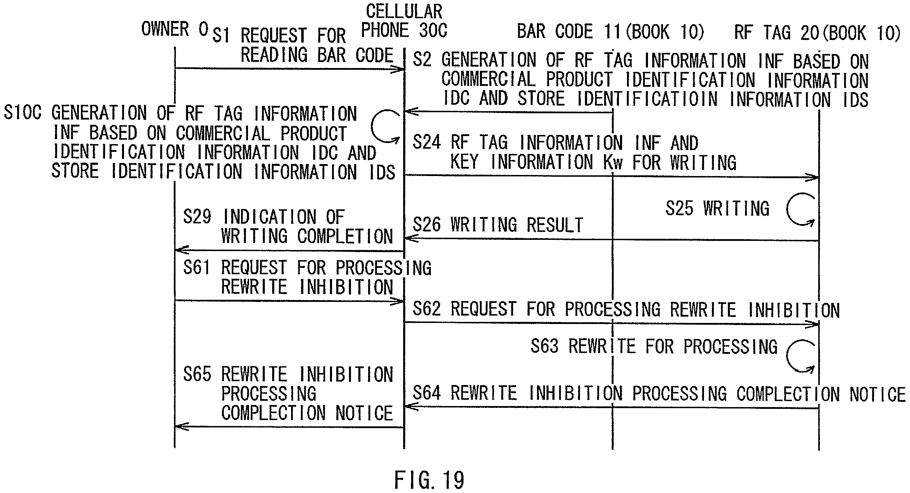

FIG. 19 shows an operating example of RF tag issuance on the RF tag issue system 3C according to the modification.

First, an owner O makes a request for reading a bar code to the cellular phone 30C (step S1). Then, the cellular phone 30C obtains the commercial product identification information IDC from the bar code 11 printed on the book 10 (step S2). These steps are the same as with the electronic commerce system 1 according to the above-described embodiment (steps S1 and S2 in FIG. 8).

Next, the cellular phone 30C generates the RF tag information INF (step S10C). Specifically, the RF tag information generation module MOD generates the RF tag information INF based on the commercial product identification information IDC received by the communication section 38 in the step S2 and the store identification information IDS stored in the memory 37.

Subsequently, the cellular phone 30C transmits the RF tag information INF and key information Kw for writing to the RF tag 20 attached on the book 10 (step S24). The RF tag 20 performs processing to write the RF tag information INF and key information Kw for writing (step S25). Then, the RF tag 20 transmits a result of a writing process in the step S25 to the cellular phone 30C (step S26). Then, the cellular phone 30C performs a writing completion indication (step S29). These steps are the same as with the electronic commerce system 1 according to the above-described embodiment (steps S24 to S26, and S29 in FIG. 8).

Next, an example of a case where rewrite inhibition processing is performed following issuance of an RF tag is described. The rewrite inhibition processing is intended to prevent the RF tag information INF written into the RF tag 20 from being rewritten.

An owner O makes a request for rewrite inhibition processing to the cellular phone 30C (step S61). Then, the cellular phone 30C transmits the request for rewrite inhibition processing to the RF tag 20 (step S62). Specifically, on the cellular phone 30C, the CPU 39 transmits the request for rewrite inhibition processing to the RF tag 20 via the communication section 38 based on an instruction from the owner O. On the RF tag 20, the communication section 21 receives the request for rewrite inhibition processing.

Secondly, the RF tag 20 performs the rewrite inhibition processing (step S63). Specifically, the control section 24 performs processing to prevent the RF tag information INF from being rewritten for the memory 22.

Thereafter, the RF tag 20 transmits a completion notice of the rewrite inhibition processing to the cellular phone 30C (step S64). Specifically, the control section 24 transmits the completion notice of the rewrite inhibition processing to the cellular phone 30C via the communication section 21. On the cellular phone 30C, the communication section 38 receives the completion notice of the rewrite inhibition processing.

Subsequently, the cellular phone 30C gives the completion notice of the rewrite inhibition processing to the owner O (step S65). Specifically, the CPU 39 indicates that the rewrite inhibition processing is completed on the display section 32.

The above steps complete this sequence.

It is to be noted that a selling system and operation thereof according to the modification are the same as with the selling system 5 according to the above-described embodiment.

### [Modification 1-4]

According to the above-described embodiment, the affiliate server 70 pays an affiliate reward based on a result that the electronic mall server 60A has transmitted a commercial product purchase page to the cellular phone 50 of a purchaser P, but the embodiment is not limited to such an arrangement. Alternatively, for example, the affiliate server 70 may pay an affiliate reward based on a result that the purchaser P has actually purchased a commercial product.

### [Modification 1-5]

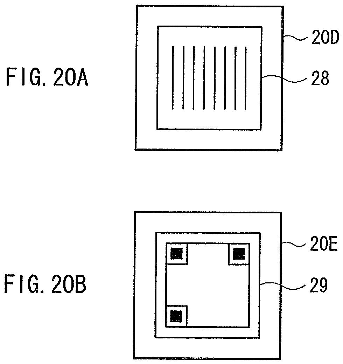

According to the above-described embodiment, the RF tag 20 is attached on the book 10, but the embodiment is not limited to such an arrangement. Alternatively, an RF tag 20D on which a bar code 28 is printed may be attached as shown in FIG. 20A, or an RF tag 20E on which a two-dimensional code 29 is printed may be attached as shown in FIG. 20B. Unlike a bar code, the two-dimensional code 29 has information in two direction intersecting with one another within a printing surface, and a QR code@ or the like is usable.

On the RF tag 20D (FIG. 20A), for example, the bar code 28 may be the same as the bar code 11 printed on the book 10, or may be different from such a bar code. Further, the bar code 28 on the RF tag 20D, or the two-dimensional code 29 on the RF tag 20E, for example, may have the store identification information IDS in addition to the commercial product identification information IDC on the bar code 11, or additionally may have any other information on the book 10. In such a manner, it is possible to achieve the same effect as with the above-described embodiment by obtaining the commercial product identification information IDC and the store identification information IDS from the bar code 28 or the two-dimensional code 29 with the use of the camera 55 even when, for example, the cellular phone 50 of the purchaser P has not the RF tag reader/writer 56.

### [Modification 1-6]

According to the above-described embodiment, the RF tag 20 is attached on a commercial product for sale (book 10), but the embodiment is not limited to such an arrangement. Alternatively, for example, the RF tag 20 may be attached on a commercial product for rental use. Specifically, for example, the RF tag 20 may be attached on a video cassette, DVD® and the like for rental use that are laid out at a rental video store. In such a case as well, when a purchaser P rents a DVD that he or she has taken an interest in at a rental video store at another rental video store belonging to the same rental video chain, it is possible to pay a reward to the store giving a rental opportunity.

### <2. Second Embodiment>

Next, an advertisement system 8 according to a second embodiment of the present disclosure is described. The advertisement system 8 according to the second embodiment, which is issued by the RF tag issue system 3 according to the above first embodiment of the present disclosure, runs advertisement using an RF tag 20 attached on a poster. It is to be noted that any components essentially same as the electronic commerce system 1 according to the above-described first embodiment are marked with the same codes, and the related descriptions are omitted as appropriate.

### [Configuration Example]

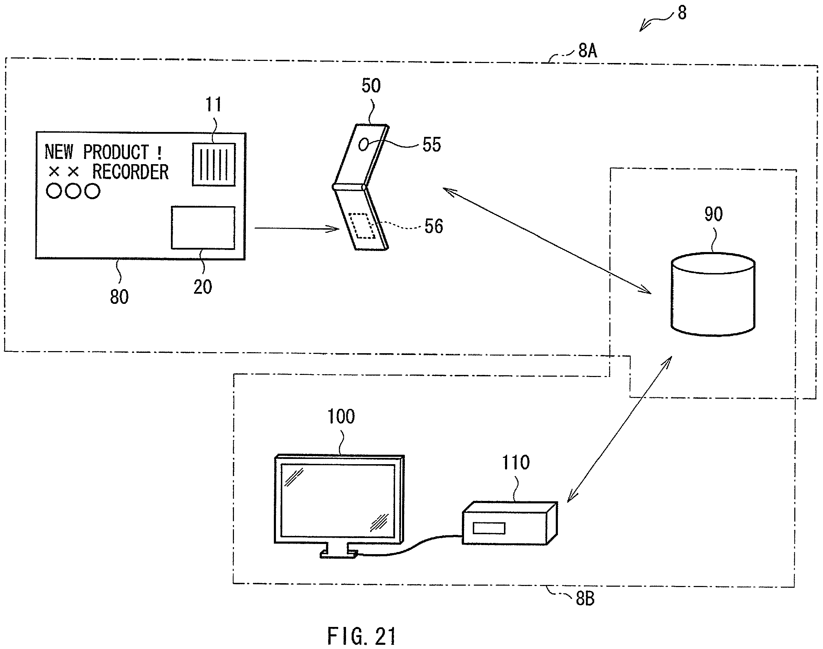

FIG. 21 shows a configuration example of the advertisement system 8. The advertisement system 8 includes advertisement systems 8A and 8B.

The advertisement system 8A has a poster 80, a cellular phone 50, and an advertisement server 90. The advertisement system 8A intends to ensure that a purchaser P who sees and takes an interest in the poster 80 obtains advertisement data AD from the advertisement server 90 using the cellular phone 50.

In this example, the poster 80 is an advertisement poster put up on a billboard at a station B. On the poster 80 as shown in FIG. 21, a bar code 11 is printed, and an RF tag 20 is attached. The bar code 11 has advertisement identification information IDD which allows identification of advertisement on the poster. As with the above-described first embodiment, the RF tag 20 holds the RF tag information INF, while communicating the RF tag information INF or other data with the cellular phone 50 via a noncontact communication. In this example, the RF tag information INF includes the advertisement identification information IDD, and advertisement billboard location identification information IDP which allows identification of a station where the advertisement is put up. As with the above-described first embodiment, the RF tag information INF is stored in the RF tag 20 when the RF tag is issued by the cellular phone 30. In other words, the advertisement identification information IDD corresponds to the commercial product identification information IDC according to the above-described first embodiment, while the advertisement billboard location identification information IDP corresponds to the store identification information IDS according to the above-described first embodiment. It is to be noted that the poster is put up on a billboard at a station in this example, but the embodiment is not limited to such an arrangement, and the poster may be put up anywhere.

The cellular phone 50 is a terminal used by a purchaser P who takes an interest in the poster 80, configuration thereof being the same as shown in FIG. 5.

The advertisement server 90 has a function to provide the advertisement data AD to the cellular phone 50 and the like based on the advertisement identification information IDD provided from a purchaser P (cellular phone 50) and the like, and to perform processing to pay a reward (affiliate processing) to a managing vendor of a station B.

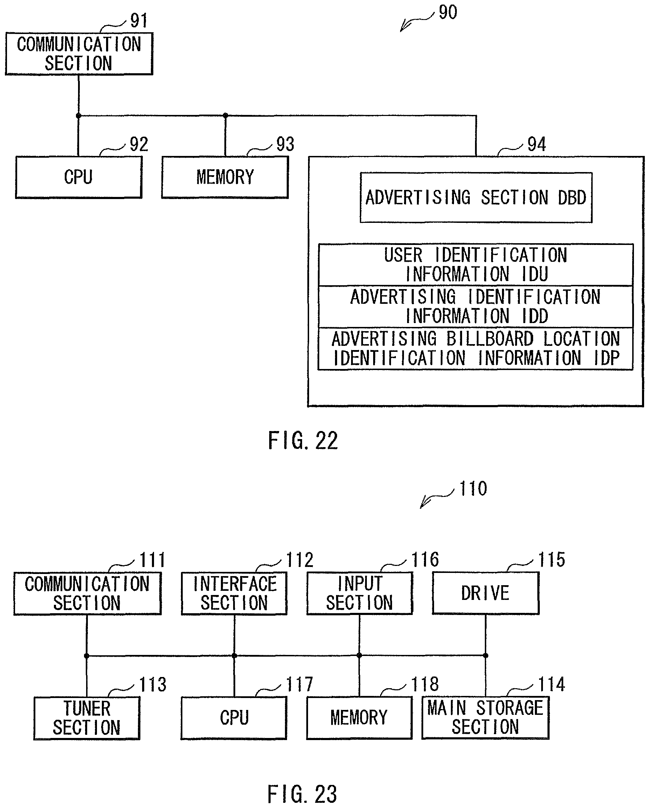

FIG. 22 shows a configuration example of the advertisement server 90. The advertisement server 90 has a communication section 91, a CPU 92, a memory 93, and a main storage section 94.

The communication section 91 is a network interface for communication with the cellular phone 50 via the Internet and a base station for the cellular phone that are not shown in the figure. The CPU 92 performs affiliate processing. The memory 93 holds temporary information when the CPU 92 executes processing.

The main storage section 94 holds programs to be used when the CPU 92 executes processing. Further, the main storage section 94 has an advertisement database DBD storing the advertisement data AD to be transmitted to the cellular phone 50 and the like. In this example, the advertisement database DBD has the advertisement data AD itself, but the embodiment is not limited to such an arrangement. Alternatively, for example, the advertisement database DBD may have a URL of a server to deliver the advertisement data AD. In such a case, the advertisement server 90 transmits a URL of a server to deliver the advertisement data AD in response to a request from the cellular phone 50, while the cellular phone 50 may receive a delivery of the advertisement data AD based on the URL. Moreover, the main storage section 94 also has a function to store user identification information IDU which allows identification of a purchaser P, the advertisement identification information IDD, and the advertisement billboard location identification information IDP in association with each other. The user identification information IDU is issued by the advertisement server 90 when user registration is carried out in advance on the adverting system 8.

An advertisement system 8B has a picture recording/playback unit 110, a display unit 100, and the advertisement server 90. In this example, the adverting system 8B is used by a purchaser P to view the advertisement data AD at home based on the advertisement identification information IDD and other data that are accumulated on the advertisement server 90 by the advertisement system 8A.

The picture recording/playbaek unit 110 records a video picture, or plays back the recorded video picture.

FIG. 23 shows a configuration example of the picture recording/playback unit 110. The picture recording/playback unit 110 has a communication section 111, an interface section 112, a tuner section 113, a main storage section 114, a drive 115, an input section 116, a CPU 117, and a memory 118. The communication section 111 is a network interface for communication with the advertisement server 90 via the Internet that is not shown in the figure. The interface section 112 is an interface with a display unit 100, and an interface such as HDMI (High Definition Multimedia Interface) is applicable for example. The tuner section 113 is intended to receive TV broadcasting service. The main storage section 114 holds the TV broadcasting service received by the tuner section 113, and HDD (Hard Disk Drive) is usable for example. The drive 115 is intended to drive an external storage medium that is not shown in the figure. As the external storage medium, Blu-ray Disc© may be usable for example. The input section 116 is an input interface for information input by a purchaser P. The CPU 117 controls those blocks. The memory 118 holds temporary information to be used when the CPU 117 executes processing.

The display unit 100, which displays video pictures, is a TV receiver in this example. Further, the display unit 100, which is connected with the picture recording/playback unit 110, is capable of displaying video pictures based on video signals supplied from the picture recording/playback unit 110.

Hereupon, the poster 80 corresponds to a specific example of an "advertisement medium" in the present disclosure. The RF tag 20 corresponds to a specific example of a "memory tag" in the present disclosure. The communication section 21 corresponds to a specific example of a "transmitting section" in the present disclosure. The picture recording/playback unit 110 corresponds to a specific example of a "client's terminal" in the present disclosure. The advertisement server 90 corresponds to a specific example of an "advertisement server" in the present disclosure. The communication section 91 corresponds to a specific example of a "first receiving section" in the present disclosure. The CPU 92 corresponds to a specific example of a "processing section" in the present disclosure.

### [Operation and Function]

Next, detailed operation of the advertisement systems 8A and 8B is described.

### (Detailed Operation of Advertisement System 8A)

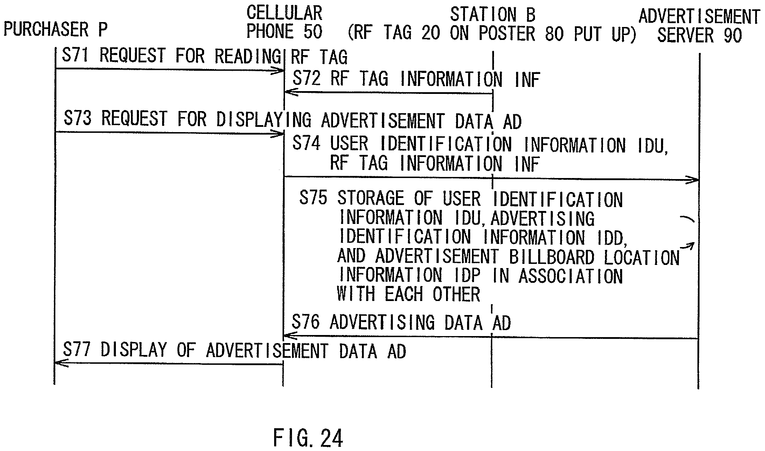

FIG. 24 shows an operating example of the advertisement system 8A. First, the advertisement system 8A obtains the RF tag information INF from the RF tag 20 attached on the poster 80 according to operation by a purchaser P at a station B, and transmits the RF tag information INF to the advertisement server 90. Then, the advertisement server 90 transmits the advertisement data AD related to the poster 80 to the cellular phone 50. Hereinafter, such steps are described in details.

First, a purchaser P makes a request for reading an RF tag to the cellular phone 50 at a station B (step S71). Then, the cellular phone 50 obtains the RF tag information INF from the RF tag 20 attached on the poster 80 (step S72). Specifically, on the cellular phone 50, application software is started, and the CPU 59 controls the RF tag reader/writer 56 according to operation of the input section 51 by the purchaser P, requesting the RF tag information INF to the RF tag 20. On the RF tag 20, the control section 24 reads the RF tag information INF from the memory 22 based on a request transmitted from the cellular phone 50, and transmits the RF tag information INF to the cellular phone 50 via the communication section 21. Then, on the cellular phone 50, the RF tag reader/writer 56 receives the RF tag information INF.

Next, the purchaser P makes a request for displaying the advertisement data AD related to the poster 80 to the cellular phone 50 (step S73). Then, the cellular phone 50 transmits the user identification information IDU and the RF tag information INF to the advertisement server 90 based on the request (step S74). Specifically, on the cellular phone 50, the CPU 59 transmits the RF tag information INF received by the RF tag reader/writer 56 in the step S72 along with the user identification information IDU to the advertisement server 90 via the communication section 58 according to operation by the purchaser P. Then, on the advertisement server 90, the communication section 91 receives the user identification information IDU and the RF tag information INF.

Subsequently, the advertisement server 90 holds the user identification information IDU, the advertisement identification information IDD, and the advertisement billboard location identification information IDP in association with one another (step S75). Specifically, the CPU 92 stores in the main storage section 94 the user identification information IDU received by the receiving section 91 in the step S74, and the advertisement identification information IDD and the advertisement billboard location identification information IDP that are included in the RF tag information INF in association with one another.

Thereafter, the advertisement server 90 transmits the advertisement data AD to the cellular phone 50 (step S76). Specifically, the CPU 92 retrieves the advertisement database DBD in the main storage section 94 based on the advertisement identification information IDD received by the receiving section 91 in the step S74, and obtains the advertisement data AD (for example, data on a home page of the commercial product) corresponding to the advertisement identification information IDD. Then, the CPU 92 transmits the obtained advertisement data AD to the cellular phone 50 via the communication section 91. On the cellular phone 50, the communication section 58 receives the advertisement data AD.

At this time, the advertisement server 90 may transmit other advertisement information in addition to the advertisement data AD. Other advertisement information may include, for example, information on stores handling commercial products related to the advertisement data AD. In such a case, the advertisement server 90 is capable of obtaining the store information by identifying the commercial product based on the advertisement identification information IDD and retrieving a database for a store that is not shown in the figure. Further, other advertisement information may also include, for example, information on stores around a current location of the purchaser P. In such a case, the advertisement server 90 is capable of obtaining the store information by identifying the commercial product based on the advertisement identification information IDD as well as a location (station B) based on the advertisement billboard location identification information IDP and by retrieving a database for a store that is not shown in the figure.

Next, the cellular phone 50 displays the advertisement data AD (step S77). Specifically, the CPU 59 indicates the advertisement data AD received by the communication section 58 in the step S76 on the display section 52.

The above steps complete this sequence.

As stated above, when a purchaser P sees and takes an interest in various posters put up at stations or around the corner, he or she obtains the RF tag information INF from the poster by operating the cellular phone 50, transmitting the RF tag information INF to the advertisement server 90. In such a manner, a lot of RF tag information INF associated with the user identification information IDU corresponding to the purchaser P is accumulated in the advertisement server 90.

### (Detailed Operation of Advertisement System 8B)

Next, detailed operation of the advertisement system 8B based on the RF tag information INF accumulated in the advertisement server 90 in such a manner is described.

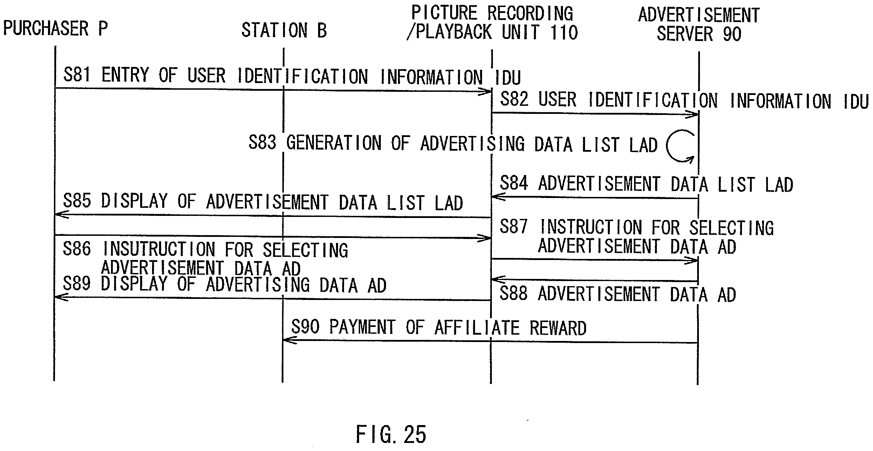

FIG. 25 shows an operating example of the advertisement system 8B. First, the advertisement system 8B generates an advertisement data list based on the RF tag information INF accumulated in the advertisement server 90 in response to a request from a purchaser P, and transmits the advertisement data list to the picture recording/playback unit 110. Then, the advertisement server 90 transmits the advertisement data AD selected on the picture recording/playback unit 110 to the picture recording/playback unit 110. Hereinafter, these steps are described in details.

First, a purchaser P enters the user identification information TDU on the picture recording/playback unit 110 (step S81). Then, the picture recording/playback unit 110 transmits the user identification information IDU to the advertisement server 90 (step S82). Specifically, on the picture recording/playback unit 110, the CPU 117 transmits the user identification information IDU that an owner O enters by operating the input section 31 to the advertisement server 90 via the communication section 111. On the advertisement server 90, the communication section 91 receives the user identification information IDU.

Next, the advertisement server 90 generates an advertisement data list LAD (step S83). Specifically, the CPU 92 obtains a plurality of advertisement identification information IDD that is stored in the main storage section 94 and is associated with the user identification information IDU, based on the user identification information IDU received by the communication section 91 in the step S82. Then, the CPU 92 obtains a plurality of advertisement data AD by retrieving the advertisement database DBD based on a plurality of obtained advertisement identification information IDD, generating the advertisement data list LAD.

The advertisement data AD in this case may be the same as, or different from the advertisement data AD in the case of the advertisement system 8A (FIG. 24). For example, the advertisement data AD may be data on a home page in the advertisement system 8A, while the advertisement data AD may be video data in the advertisement system 8B.

Subsequently, the advertisement server 90 transmits the advertisement data list LAD to the picture recording/playback unit 110 (step S84). Specifically, the CPU 92 transmits the advertisement data list LAD generated in the step S83 to the picture recording/playback unit 110 via the communication section 91. On the picture recording/playback unit 110, the communication section 111 receives the advertisement data list LAD.

Thereafter, the picture recording/playback unit 110 displays the advertisement data list LAD (step S85). Specifically, the CPU 117 transmits the advertisement data list LAD received by the communication section 111 in the step S84 to the display unit 100 via the interface section 112, and then the display unit 100 displays the advertisement data list LAD.

Afterward, the purchaser P gives an instruction for selecting the advertisement data AD to the picture recording/playback unit 110 (step S86). Then, the picture recording/playback unit 110 transmits the instruction for selecting the advertisement data to the advertisement server 90 (step S87). Specifically, first of all, the purchaser P selects the advertisement data AD that he or she likes to view, based on the advertisement data list LAD displayed on the display unit 100. On the picture recording/playback unit 110, the CPU 117 transmits the instruction for selecting the advertisement data to the advertisement server 90 via the communication section 111 according to operation of the input section 116 by the purchaser P. On the advertisement server 90, the communication section 91 receives the instruction for selecting the advertisement data.

Next, an advertisement server 88 transmits the advertisement data AD to the picture recording/playback unit 110 (step S88). Specifically, the CPU 92 retrieves the advertisement database DBD in the main storage section 94 based on the instruction for selecting the advertisement data that is received by the communication section 91 in the step S87, and obtains the advertisement data AD (for example, video data). Then, the CPU 92 transmits the obtained advertisement data AD to the picture recording/playback unit 110 via the communication section 91. On the picture recording/playback unit 110, the communication section 111 receives the advertisement data AD transmitted from the advertisement server 90.

Subsequently, the picture recording/playback unit 110 displays the advertisement data AD (step S89). Specifically, the CPU 117 transmits the advertisement data AD received by the communication section 111 in the step S88 to the display unit 100 via the interface section 112. Then, the display unit 100 displays the advertisement data AD.

Thereafter, the advertisement server 90 performs processing for paying an affiliate reward to a managing vendor of a station B (step S90). Specifically, the CPU 92 obtains the advertisement billboard location identification information IDP (station B) that is stored in the main storage section 94 and is associated with the advertisement identification information IDD, based on the instruction for selecting the advertisement data (advertisement identification information IDD) that is received by the communication section 91 in the step S87. Then, the CPU 92 performs processing for paying a reward to a managing vendor of a station B.

The above steps complete this sequence.

### [Effect]

As stated above, according to the embodiment of the present disclosure, an RF tag storing the advertisement identification information and the advertisement billboard location identification information therein is attached on a poster for advertisement. This allows to pay a reward to the advertisement provider when a purchaser takes an interest in a commercial product related to the poster. Any other advantages are the same as with the first embodiment of the present disclosure.

### [Modification 2-1]

According to the above-described embodiment, the RF tag information includes the advertisement identification information IDD and the advertisement billboard location identification information IDP, but the embodiment is not limited to such an arrangement. Alternatively, for example, the RF tag information may not include the advertisement billboard location identification information IDP, and instead the RF tag issue server may hold the advertisement billboard location identification information IDP as with the modification 1-2 according to the first embodiment of the present disclosure.

### [Modification 2-2]

According to the above-described embodiment of the present disclosure, the advertisement server 90 transmits an advertisement data list and advertisement data to the picture recording/playback unit 110, but the embodiment is not limited to such an arrangement. Alternatively, for example, the advertisement data list and advertisement data may be transmitted to a home video game machine or a personal computer, or may be transmitted directly to the display unit 100. Further, devices are not limited to those stationary electronic apparatuses, and portable electronic apparatuses such as a cellular phone and PDA (Personal Digital Assistant) may be applicable.

The present technology has been described taking some embodiments and modifications, but is not limited to such embodiments and modifications, and different variations may be available.

According to the above-described embodiment of the present disclosure, for example, a purchaser P obtains the RF tag information INF from the RF tag 20 using the cellular phone 50, but the embodiment is not limited to such an arrangement. Alternatively, for example, a PDA (Personal Digital Assistant) may be used to obtain the RF tag information INF

It is to be noted that the present technology is allowed to be configured as set out in the following numbered clauses:
(1) A memory tag issue terminal including:
   a first reading section reading commercial product information from an identification code printed on a commercial product or reading advertisement information from an identification code printed on an advertisement medium, the commercial product information being concerned with the commercial product, and the advertisement information being concerned with an advertisement object advertised through the advertisement medium;
   a writing section writing tag information into a memory tag attached or to be attached on the commercial product or the advertisement medium, the tag information including the commercial product information or the advertisement information; and
   an acquisition section acquiring vendor identification information which allows identification of a vendor who handles the commercial product or the advertisement medium.
(2) The memory tag issue terminal according to (1), wherein the tag information includes the vendor identification information as well.
(3) The memory tag issue terminal according to (1), further including:
   a second reading section reading tag identification information from the memory tag, the tag identification information allowing identification of the memory tag; and
   a first transmitting section transmitting the tag identification information and the vendor identification information in association with each other, to a first server.
(4) The memory tag issue terminal according to any one of (1) to (3), further including:
   a second transmitting section transmitting the vendor identification information along with the commercial product information or the advertisement information to a second server; and
   a receiving section receiving the tag information from the second server, the received tag information having been generated based on the commercial product information or the advertisement information,
   wherein the writing section writes, into the memory tag, the tag information received by the receiving section.
(5) The memory tag issue terminal according to any one of (1) to (3), further including:
   a tag information generation section generating the tag information based on the commercial product information or the advertisement information,
   wherein the writing section writes, into the memory tag, the tag information generated by the tag information generation section.
(6) The memory tag issue terminal according to (5), wherein the tag information generation section generates the tag information based on the vendor identification information as well.
(7) A memory tag issue server including:
   a receiving section receiving both commercial product information or advertisement information and vendor identification information from a memory tag issue terminal, the memory tag issue terminal being configured to read the commercial product information from an identification code printed on a commercial product or to read the advertisement information from an identification code printed on an advertisement medium and to write tag information into the memory tag, the commercial product information being concerned with the commercial product, the advertisement information being concerned with a advertisement object advertised through the advertisement medium, and the vendor identification information allowing identification of a vendor who handles the commercial product or the advertisement medium;
   a tag information generation section generating the tag information based on the commercial product information or the advertisement information; and
   a transmitting section transmitting the tag information to the memory tag issue terminal.
(8) The memory tag issue server according to (7), wherein the tag information generation section generates the tag information based on the vendor identification information as well.
(9) An advertisement server including:
   a first receiving section receiving tag information from a client's terminal, the tag information being stored in a memory tag attached on a commercial product or an advertisement medium and including commercial product information or advertisement information, the commercial product information being concerned with the commercial product, and the advertisement information being concerned with a advertisement object advertised through the advertisement medium; and
   a processing section executing prescribed processing based on the commercial product information or the advertisement information, or vendor identification information which allows identification of a vendor who handles the commercial product or the advertisement medium.
(10) The advertisement server according to (9), wherein the tag information includes the vendor identification information as well.
(11) The advertisement server according to (9) further including a second receiving section,
   wherein the first receiving section receives tag identification information which allows identification of the memory tag, and
   the second receiving section receives vendor identification information corresponding to the tag identification information from a server which holds tag identification information and vendor identification information in association with each other.
(12) The advertisement server according to any one of (9) to (11), wherein the processing section transmits, to the client's terminal, detailed information concerned with the commercial product or the advertisement object.
(13) The advertisement server according to any one of (9) to (11), wherein the processing section transmits, to a client's terminal, a price information of the commercial product or the advertisement object at one or more shops.
(14) The advertisement server according to any one of (9) to (11), wherein the processing section performs a reward payment procedure to the vendor.
(15) A vendor identification server including:
   a first receiving section receiving, from a memory tag issue terminal, tag identification information allowing identification of a memory tag and vendor identification information allowing identification of a vendor who handles a commercial product or an advertisement medium, the memory tag issue terminal being configured to read the commercial product information from an identification code printed on the commercial product or to read the advertisement information from an identification code printed on the advertisement medium and to write tag information into the memory tag;
   a storage section holding the tag identification information and the vendor identification information in association with each other;
   a second receiving section receiving tag identification information from an external device; and
   a transmitting section retrieving vendor identification information corresponding to the tag identification information received by the second receiving section, based on the tag identification information and the vendor identification information which are stored in the storage section, and transmitting the retrieved vendor identification information.
(16) A memory tag including:
   a storage section holding tag information including both commercial product information or advertisement information and vendor identification information, the commercial product information being concerned with a commercial product and being obtained from an identification code printed on the commercial product, the advertisement information being concerned with a advertisement object advertised through a advertisement medium and being obtained from an identification code printed on the advertisement medium, and vendor identification information allowing identification of a vendor who handles the commercial product or the advertisement medium; and
   a transmitting section transmitting, to a client's terminal, the commercial product information or the advertisement information being along with the vendor identification information.
(17) A memory tag issuing method including:
   allowing a memory tag issue terminal to read commercial product information from an identification code printed on a commercial product or to read advertisement information from an identification code printed on an advertisement medium, the commercial product information being concerned with the commercial product, and the advertisement information being concerned with a advertisement object advertised through the advertisement medium;
   obtaining vendor identification information which allows identification of a vendor who handles the commercial product or the advertisement medium; and
   allowing the memory tag issue terminal to write tag information into a memory tag, the tag information being generated based on the commercial product information or the advertisement information, the memory tag being attached or to be attached on the commercial product or the advertisement medium.
(18) The memory tag issuing method according to (17), wherein the tag information is generated based on the vendor identification information as well.
(19) The memory tag issuing method according to (17) further including:
   allowing the memory tag issue terminal to read tag identification information from the memory tag, the tag identification information allowing identification of the memory tag; and
   allowing the memory tag issue terminal to transmit the tag identification information and the vendor identification information in association with each other.
(20) An advertising method including:
   allowing a client's terminal to read tag information including commercial product information or advertisement information from a memory tag attached on a commercial product or an advertisement medium, the commercial product information being concerned with the commercial product, and the advertisement information being concerned with a advertisement object advertised through the advertisement medium;
   allowing an advertisement server to transmit detailed information concerned with the commercial product or the advertisement object to the client's terminal, the detailed information being obtained based on the commercial product information or the advertisement information which are read by the client's terminal; and
   allowing the advertisement server to perform reward payment procedure to the vendor, based on vendor identification information allowing identification of a vendor who handles the commercial product or the advertisement medium.
(21) The advertising method according to (20), wherein the tag information includes the vendor identification information as well.
(22) The advertising method according to (20) further including:
   allowing a memory tag issue terminal to read tag identification information from the memory tag, the tag identification information allowing identification of the memory tag; and
   obtaining the vendor identification information corresponding to the read tag identification information from a server which holds tag identification information and vendor identification information in association with each other.

The present disclosure contains subject matter related to that disclosed in Japanese Priority Patent Application JP 2011-029729 filed in the Japan Patent Office on February 15, 2011, the entire content of which is hereby incorporated by reference.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

Although particular embodiments have been described herein, it will be appreciated that the invention is not limited thereto and that many modifications and additions thereto may be made within the scope of the invention. For example, various combinations of the features of the following dependent claims can be made with the features of the independent claims without departing from the scope of the present invention.

## Claims

1. A memory tag issue terminal comprising:
a first reading section reading commercial product information from an identification code printed on a commercial product or reading advertisement information from an identification code printed on an advertisement medium, the commercial product information being concerned with the commercial product, and the advertisement information being concerned with an advertisement object advertised through the advertisement medium;
a writing section writing tag information into a memory tag attached or to be attached on the commercial product or the advertisement medium, the tag information including the commercial product information or the advertisement information; and
an acquisition section acquiring vendor identification information which allows identification of a vendor who handles the commercial product or the advertisement medium.

2. The memory tag issue terminal according to claim 1, wherein the tag information includes the vendor identification information as well.

3. The memory tag issue terminal according to claim 1, further comprising:
a second reading section reading tag identification information from the memory tag, the tag identification information allowing identification of the memory tag; and
a first transmitting section transmitting the tag identification information and the vendor identification information in association with each other, to a first server.

4. The memory tag issue terminal according to claim 1, further comprising:
a second transmitting section transmitting the vendor identification information along with the commercial product information or the advertisement information to a second server; and
a receiving section receiving the tag information from the second server, the received tag information having been generated based on the commercial product information or the advertisement information,
wherein the writing section writes, into the memory tag, the tag information received by the receiving section.

5. The memory tag issue terminal according to claim 1, further comprising:
a tag information generation section generating the tag information based on the commercial product information or the advertisement information,
wherein the writing section writes, into the memory tag, the tag information generated by the tag information generation section.

6. The memory tag issue terminal according to claim 5, wherein the tag information generation section generates the tag information based on the vendor identification information as well.

7. A memory tag issue server comprising:
a receiving section receiving both commercial product information or advertisement information and
vendor identification information from a memory tag issue terminal, the memory tag issue terminal being configured to read the commercial product information from an identification code printed on a commercial product or to read the advertisement information from an identification code printed on an advertisement medium and to write tag information into the memory tag, the commercial product information being concerned with the commercial product, the advertisement information being concerned with a advertisement object advertised through the advertisement medium, and the vendor identification information allowing identification of a vendor who handles the commercial product or the advertisement medium;
a tag information generation section generating the tag information based on the commercial product information or the advertisement information; and
a transmitting section transmitting the tag information to the memory tag issue terminal.

8. An advertisement server comprising:
a first receiving section receiving tag information from a client's tenninal, the tag information being stored in a memory tag attached on a commercial product or an advertisement medium and including commercial product information or advertisement information, the commercial product information being concerned with the commercial product, and the advertisement information being concerned with a advertisement object advertised through the advertisement medium; and
a processing section executing prescribed processing based on the commercial product information or the advertisement information, or vendor identification information which allows identification of a vendor who handles the commercial product or the advertisement medium.

9. The advertisement server according to claim 8 further comprising a second receiving section, wherein the first receiving section receives tag identification information which allows identification of the memory tag, and
the second receiving section receives vendor identification information corresponding to the tag identification information from a server which holds tag identification information and vendor identification information in association with each other.

10. A vendor identification server comprising:
a first receiving section receiving, from a memory tag issue terminal, tag identification information allowing identification of a memory tag and vendor identification information allowing identification of a vendor who handles a commercial product or an advertisement medium, the memory tag issue terminal being configured to read the commercial product information from an identification code printed on the advertisement medium and to write tag information into the memory tag;
a storage section holding the tag identification information and the vendor identification information in association with each other;
a second receiving section receiving tag identification information from an external device; and
a transmitting section retrieving vendor identification information corresponding to the tag identification information received by the second receiving section, based on the tag identification information and the vendor identification information which are stored in the storage section, and transmitting the retrieved vendor identification information.

11. A memory tag comprising:
a storage section holding tag information including both commercial product information or advertisement information and vendor identification information, the commercial product information being concerned with a commercial product and being obtained from an identification code printed on the commercial product, the advertisement information being concerned with a advertisement object advertised through a advertisement medium and being obtained from an identification code printed on the advertisement medium, and vendor identification information allowing identification of a vendor who handles the commercial product or the advertisement medium; and
a transmitting section transmitting, to a client's terminal, the commercial product information or the advertisement information being along with the vendor identification information.

12. A memory tag issuing method comprising:
allowing a memory tag issue terminal to read commercial product information from an identification code printed on a commercial product or to read advertisement information from an identification code printed on an advertisement medium, the commercial product information being concerned with the commercial product, and the advertisement information being concerned with a advertisement object advertised through the advertisement medium;
obtaining vendor identification information which allows identification of a vendor who handles the commercial product or the advertisement medium; and
allowing the memory tag issue terminal to write tag information into a memory tag, the tag information being generated based on the commercial product information or the advertisement information, the memory tag being attached or to be attached on the commercial product or the advertisement medium.

13. The memory tag issuing method according to claim 12 further comprising:
allowing the memory tag issue terminal to read tag identification information from the memory tag, the tag identification information allowing identification of the memory tag; and
allowing the memory tag issue terminal to transmit the tag identification information and the vendor identification information in association with each other.

14. An advertising method comprising:
allowing a client's terminal to read tag information including commercial product information or advertisement information from a memory tag attached on a commercial product or an advertisement medium, the commercial product information being concerned with the commercial product, and the advertisement information being concerned with a advertisement object advertised through the advertisement medium;
allowing an advertisement server to transmit detailed information concerned with the commercial product or the advertisement object to the client's terminal, the detailed information being obtained based on the commercial product information or the advertisement information which are read by the client's terminal; and
allowing the advertisement server to perform reward payment procedure to the vendor, based on vendor identification information allowing identification of a vendor who handles the commercial product or the advertisement medium.

15. The advertising method according to claim 14 further comprising:
allowing a memory tag issue terminal to read tag identification information from the memory tag, the tag identification information allowing identification of the memory tag; and
obtaining the vendor identification information corresponding to the read tag identification information from a server which holds tag identification information and vendor identification information in association with each other.
